# EUROPEAN PATENT SPECIFICATION

(11) **EP 3 091 633 B1**
(45) Date of publication and mention of the grant of the patent: **07.02.2018**
(21) Application number: 16168339.6
(22) Date of filing: 04.05.2016
(51) Int. Cl.: H02J 7/00, H02J 7/04, H02J 7/02, H01M 10/42

(54) **ADAPTIVE POWER CONVERTER OF MOBILE CHARGER**
ADAPTIVER LEISTUNGSWANDLER EINES MOBILEN LADEGERÄTS
CONVERTISSEUR DE PUISSANCE ADAPTATIVE DE CHARGEUR MOBILE

(30) Priority: 07.05.2015 US 201562158460 P; 28.04.2016 CN 201610278760
(43) Date of publication of application: 09.11.2016
(73) Proprietor: Richtek Technology Corporation, 302 Chupei City, Hsinchu (TW)
(72) Inventor: SHIU, Yi-Min, Hsinchu City 300 (TW); CHEN, Yu-Chang, Jiji Township, Nantou County 552 (TW); CHI, Chih-Wei, New Taipei City 235 (TW); CHAN, Chen-Hui, Taipei City 116 (TW)
(74) Representative: Viering, Jentschura & Partner mbB Patent- und Rechtsanwälte

(56) References cited:
- CN-A- 103 762 702
- US-A1- 2010 013 442
- US-A1- 2013 019 113
- US-A1- 2013 099 745
- US-A1- 2013 300 376
- US-A1- 2014 136 863

## Description

The present invention relates to an adaptive power converter according to the precharacterizing clauses of claim 1.

The battery capacity is the major bottleneck to the usage time of a mobile device, and the time required for charging the battery is proportional to the battery capacity. The charging speed of the mobile device can be improved by increasing the current transmitted through the charging cable, but large current flowing through the charging cable easily results in overheat problem to the charging cable or associated connector and may thus cause danger during the charging process. US Patent Application Publication No. 2010/0013442A1 provided a charging system, an electronic circuit device including secondary cell, and a power supply device for charging. US Patent Application Publication No. 2013/0099745A1 provided an external power source voltage drop compensation for portable devices. US Patent Application Publication No. 2014/0136863A1 provided high voltage charging techniques for portable devices. US Patent Application Publication No. 2013/0019113A1 provided a host device and a terminal device, and a related communication system. US Patent Application Publication No. 2013/0300376A1 provided a power supply system providing power and analog data signal for use by portable electronic device to control battery charging. Document CN103762702 A discloses a charging device of an electronic equipment. A main control circuit adjusts the output voltage and the output current of a power adapter to a quick charge current value and a quick charge voltage value respectively. The main control circuit obtains the battery voltage information from the electronic device, and determines, according to the voltage detection signal fed back by a voltage detection circuit, whether the difference between the output voltage of the power adapter and the battery voltage exceeds a voltage difference threshold, if yes, it indicates that the line impedance between the power adapter and the electronic device or between the power adapter and the battery is abnormal, and the main control circuit controls an output switch circuit to switch off the direct current output of the power adapter; if no, the main control circuit, according to the battery voltage information, adjust the output current of the power adapter, and continues to obtain the battery voltage information from the charging control circuit so as to make cyclical adjustment to the output current of the power adapter during quick charge to the battery. In this way, the process of quick charge to the battery can be optimized and the charging time is reduced.

To avoid causing danger during the charging process, the circuitry components of the conventional charging device and the charging cable are designed to have matched specifications. Accordingly, the charging device can only cooperate with a dedicated charging cable, and the user is not permitted to replace the charging cable with another charging cable having different specification. Since the architecture of the conventional charging device severely restricts the replacement flexibility of the charging cable, the usage convenience and application scope of the conventional charging device is greatly reduced.

This in mind, the present invention aims at providing an adaptive power converter that adjusts magnitude of at least one of resulting DC current signal and DC voltage signal based on a voltage drop estimation value calculated based on a device-side voltage value corresponding to signal on a power input path inside a mobile device to control a voltage drop of a charging cable to be less than a predetermined threshold.

This is achieved by an adaptive power converter according to claim 1. The dependent claims pertain to corresponding further development and improvements.

As will be seen more clearly from the detailed description following below, the claimed adaptive power converter includes a charger-side control circuit capable of controlling a power converting circuit to adjust magnitude of at least one of resulting DC current signal and DC voltage signal based on data signal transmitted from a mobile device so as to control a voltage drop of a charging cable to be less than a predetermined threshold.

In the following, the invention is further illustrated by way of example, taking reference to the accompanying drawings. Thereof
FIG. 1 is a simplified schematic diagram of a mobile device charging system according to one embodiment of the present disclosure,
FIG. 2 is a simplified functional block diagram of the mobile device charging system of FIG. 1 according to one embodiment of the present disclosure,
FIG. 3 is a simplified functional block diagram of the adaptive power converter in

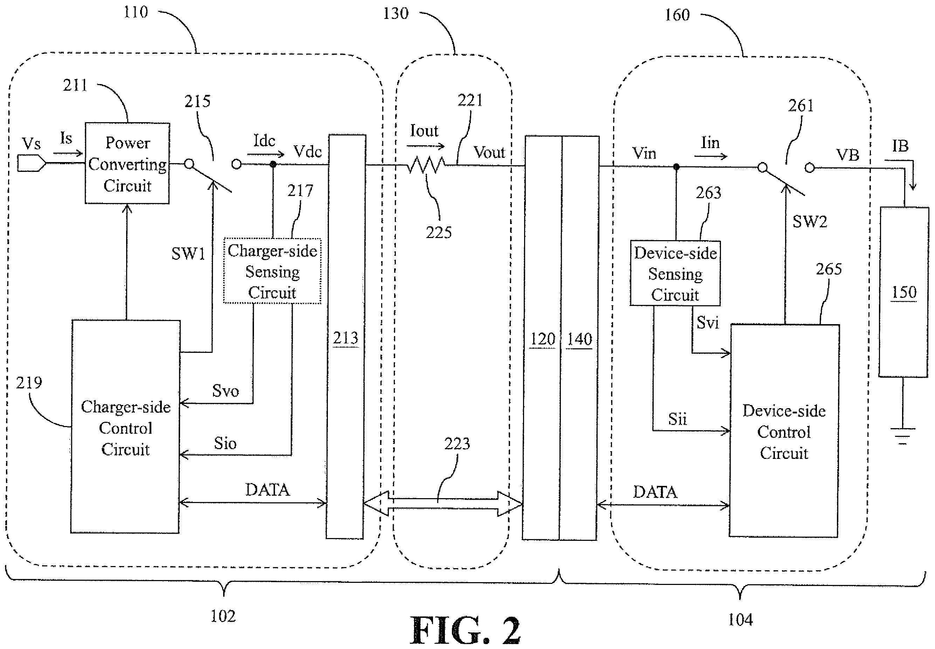

FIG. 2 according to one embodiment of the present disclosure,

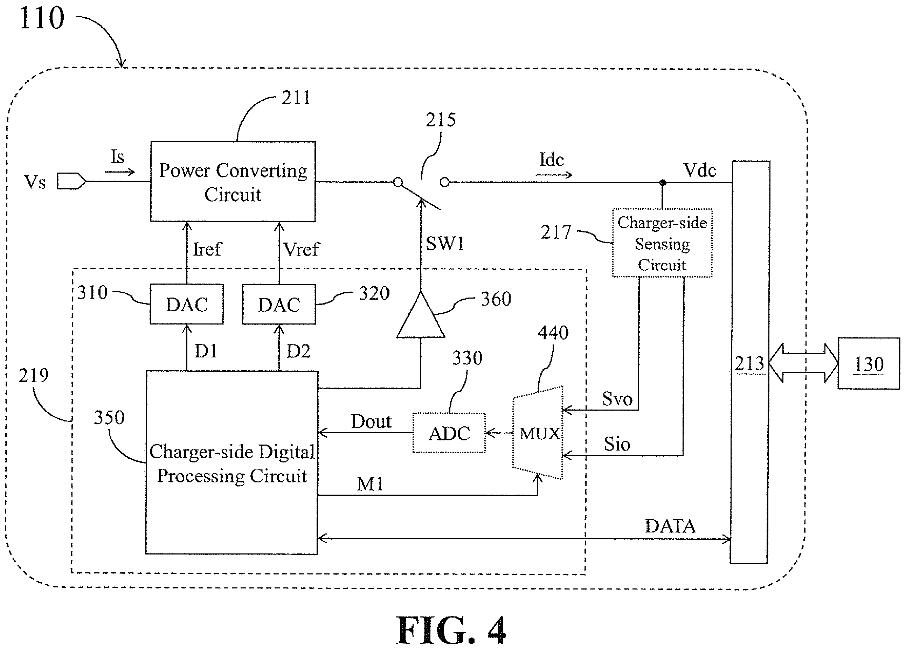

FIG. 4 is a simplified functional block diagram of the adaptive power converter in
FIG. 2 according to another embodiment of the present disclosure,

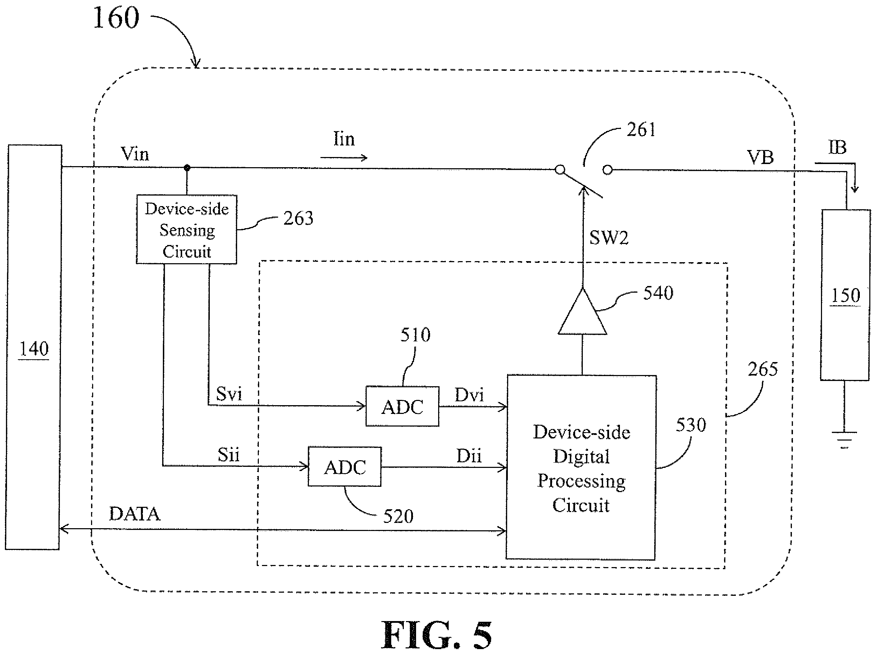

FIG. 5 is a simplified functional block diagram of the charging control circuit in FIG. 2,

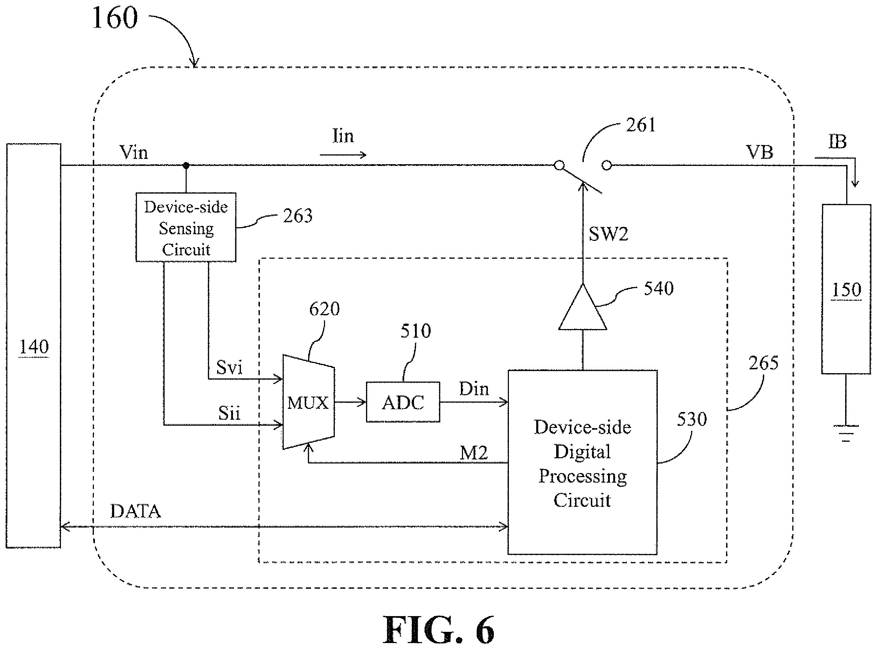

FIG. 6 is a simplified functional block diagram of another charging control circuit in FIG. 2,

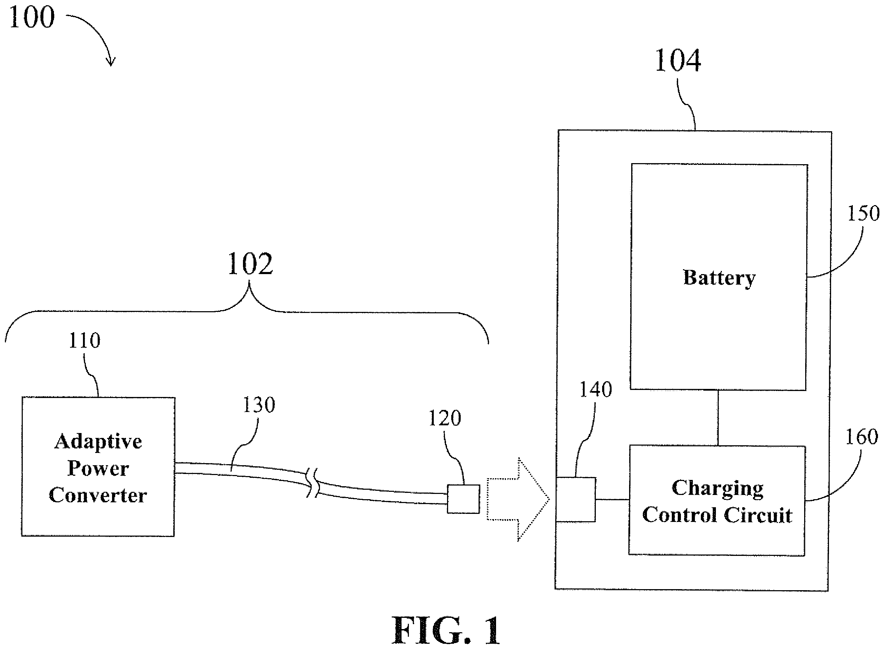

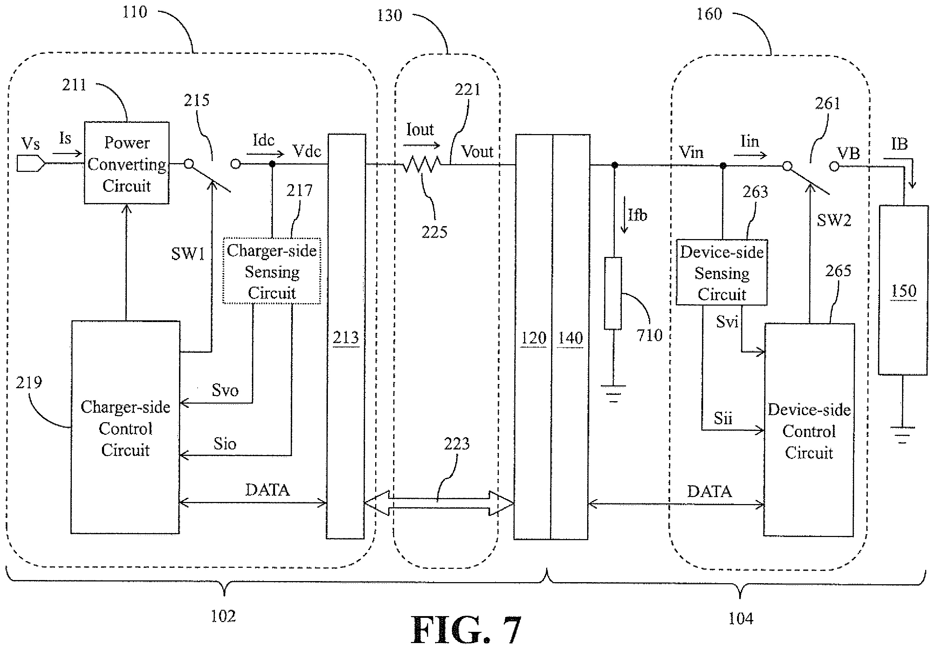

FIG. 7 is a simplified functional block diagram of the mobile device charging system of FIG. 1 when a foreign object is present therein according to one embodiment of the present disclosure,

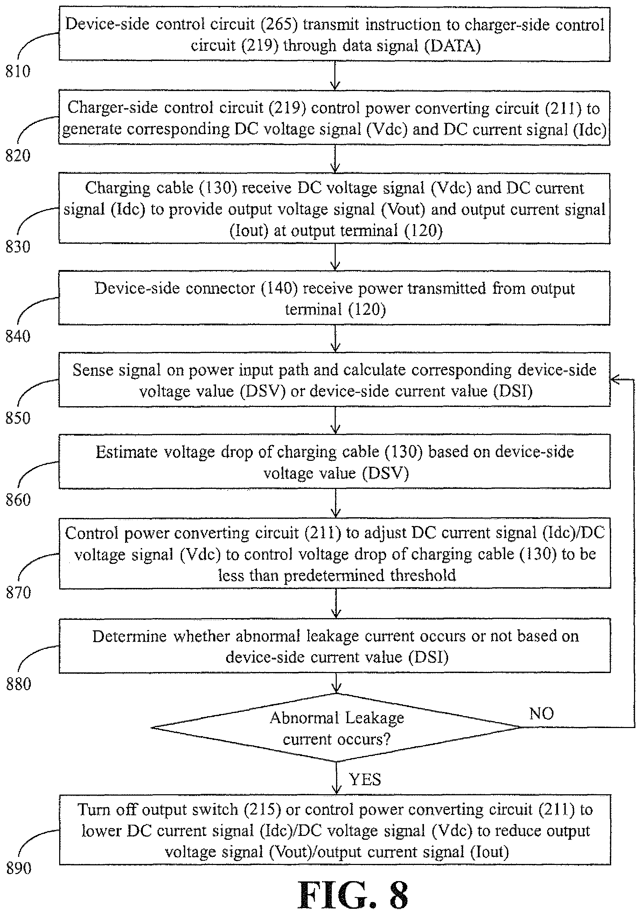

FIG. 8 is a simplified flowchart of a mobile device charging method according to the present disclosure,

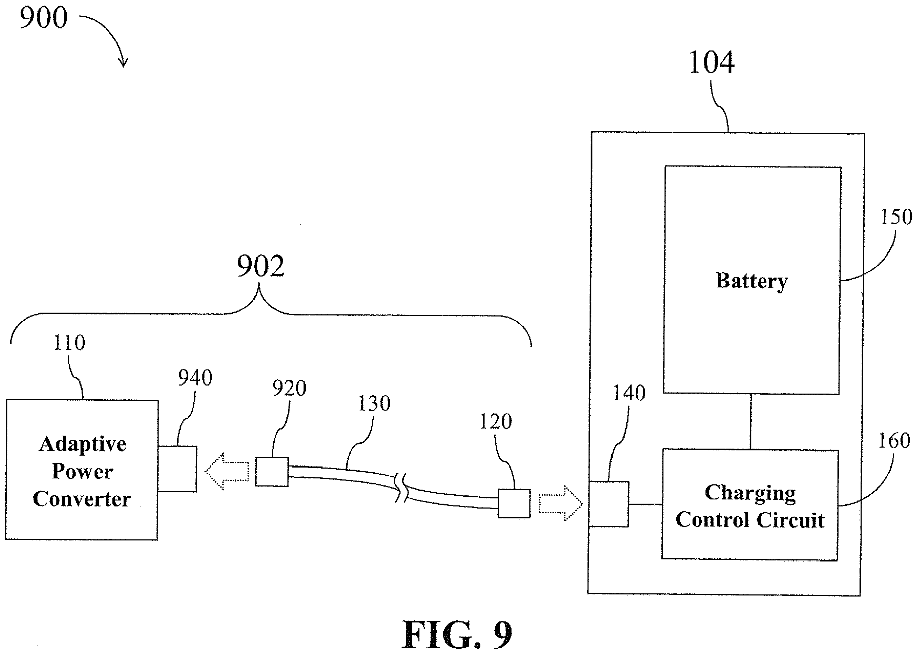

FIG. 9 is a simplified schematic diagram of a mobile device charging system according to another embodiment of the present disclosure, and

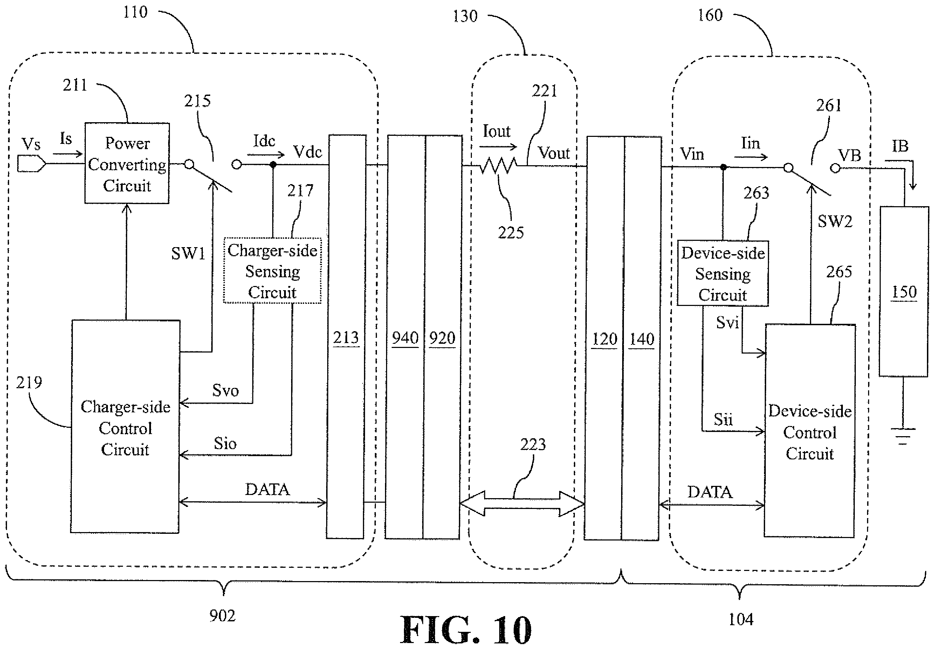

FIG. 10 is a simplified functional block diagram of the mobile device charging system of FIG. 9 according to one embodiment of the present disclosure.

Reference is made in detail to embodiments of the invention, which are illustrated in the accompanying drawings. The same reference numbers may be used throughout the drawings to refer to the same or like parts, components, or operations.

FIG. 1 shows a simplified schematic diagram of a mobile device charging system 100 according to one embodiment of the present disclosure. As shown in FIG. 1, the mobile device charging system 100 comprises a mobile charger 102 and a mobile device 104, wherein the mobile charger 102 can be utilized for charging the mobile device 104.

The mobile charger 102 comprises an adaptive power converter 110, an output terminal 120, and a charging cable 130. The adaptive power converter 110 is arranged to operably receive data signals and capable of generating a DC voltage signal and a DC current signal. The charging cable 130 is coupled between the adaptive power converter 110 and the output terminal 120, and arranged to operably transmit the data signals and capable of receiving the DC voltage signal and DC current signal generated by the adaptive power converter 110 to provide an output voltage signal and an output current signal at the output terminal 120.

The mobile device 104 comprises a device-side connector 140, a battery 150, and a charging control circuit 160. The device-side connector 140 is utilized for detachably connecting with the output terminal 120 to receive the power transmitted from the output terminal 120, and there is a power input path arranged between the device-side connector 140 and the battery 150. The charging control circuit 160 is coupled with the device-side connector 140 and capable of generating and transmitting the data signals to the adaptive power converter 110 through the device-side connector 140 and the charging cable 130.

The adaptive power converter 110 of the mobile charger 102 is arranged to operably adjust the magnitude of the DC voltage signal or the DC current signals based on the content of the data signal transmitted from the charging control circuit 160, so as to control the voltage drop of the charging cable 130 to be less than a predetermined threshold.

FIG. 2 shows a simplified functional block diagram of the mobile device charging system 100 according to one embodiment of the present disclosure. As shown in FIG. 2, the adaptive power converter 110 comprises a power converting circuit 211, a communication interface 213, an output switch 215, a charger-side sensing circuit 217, and a charger-side control circuit 219. The charging cable 130 comprises a power transmission line 221 and a data transmission line 223, wherein a reference 225 denotes the parasitic resistance of the power transmission line 221. The charging control circuit 160 comprises an input switch 261, a device-side sensing circuit 263, and a device-side control circuit 265.

In the adaptive power converter 110, the power converting circuit 211 is arranged to operably convert a source voltage signal Vs and a source current signal Is into a DC voltage signal Vdc and a DC current signal Idc. The communication interface 213 is arranged to operably transmit a data signal DATA, and there is a power output path arranged between the power converting circuit 211 and the communication interface 213. The communication interface 213 is capable of outputting the DC voltage signal Vdc and the DC current signal Idc to the charging cable 130, so that the charging cable 130 provides the output voltage signal Vout and the output current signal Iout to the output terminal 120. The output switch 215 is positioned on the aforementioned power output path, and utilized for selectively conducting the DC voltage signal Vdc and the DC current signal Idc generated by the power converting circuit 211 to the communication interface 213. The charger-side sensing circuit 217 is arranged to operably sense the signals on the power output path (e.g., the signal Vdc or the signal Idc) to generate a corresponding output voltage sensing signal Svo and/or an output current sensing signal Sio. The charger-side control circuit 219 is coupled with the power converting circuit 211 and the communication interface 213, and arranged to operably receive the data signal DATA.

In practice, the charger-side sensing circuit 217 may be coupled with the signal path between the power converting circuit 211 and the output switch 215 to sense the signal on the signal path between the power converting circuit 211 and the output switch 215. The charger-side sensing circuit 217 may be coupled with the signal path between the output switch 215 and the communication interface 213 to sense the signal on the signal path between the output switch 215 and the communication interface 213.

In operations, the charger-side control circuit 219 controls the operations of the power converting circuit 211 and the output switch 215 based on the content of the received data signal DATA and/or the sensing result of the charger-side sensing circuit 217 in respect of the signals on the power output path, so as to control the voltage drop of the charging cable 130 to be less than the predetermined threshold.

Depending upon the source device or the type of the source voltage signal Vs and the source current signal Is, the power converting circuit 211 may be implemented with various appropriate boost power converter, buck power converter, buck-boost power converter, or flyback power converter. In other words, the source voltage signal Vs may be an AC voltage signal or a DC voltage signal, and the magnitude of the DC voltage signal Vdc may be greater than that of the source voltage signal Vs or may be lower than that of the source voltage signal Vs. Similarly, the magnitude of the DC current signal Idc may be greater than that of the source current signal Is or may be lower than that of the source current signal Is.

As long as the mobile device 104 can sustain, the DC current signal Idc generated by the power converting circuit 211 may be configured to be 5A, 8A, 10A or an even larger current value to effectively increase the charging speed of the mobile device 104.

In practice, different functional blocks of the adaptive power converter 110 may be realized with separate circuits, or may be integrated into a single circuit chip. In addition, the output switch 215, the charger-side sensing circuit 217, and/or some components of the power converting circuit 211 (e.g., the power switch and inductive elements, not shown in FIG. 2) may be instead arranged outside the adaptive power converter 110. For example, the output switch 215, the charger-side sensing circuit 217, and/or the power switch and inductive elements of the power converting circuit 211 may be arranged outside the adaptive power converter 110 (e.g., arranged on a circuit board connecting with the adaptive power converter 110) while the other functional blocks of the adaptive power converter 110 are integrated into a single chip.

In the charging cable 130, the power transmission line 221 is utilized for transmitting the power supplied from the adaptive power converter 110 to the mobile device 104, and the data transmission line 223 is utilized for transmitting the data signal DATA. The parasitic resistance 225 of the power transmission line 221 may cause a certain voltage drop of the charging cable 130, but the magnitudes of the output voltage signal Vout and the output current signal Iout provided from the charging cable 130 to the output terminal 120 are typically proportional to the magnitudes of the DC voltage signal Vdc and the DC current signal Idc.

In practice, the charging cable 130 may be realized with various transmission cables capable of simultaneously transmitting power and data. For example, the charging cable 130 may be realized with the USB cable in some embodiments. In this situation, the data signal DATA may be realized with the D+ and D- signals defined by USB series specifications, or may be realized with the CC1 and CC2 signals defined by USB-PD (Universal Serial Bus Power Delivery) series specifications.

In the charging control circuit 160, the input switch 261 is positioned on the power input path between the device-side connector 140 and the battery 150. The input switch 261 is utilized for selectively conducting an input voltage signal Vin and an input current signal Iin which are actually received by the device-side connector 140 to the input terminal of the battery 150 to form a charging voltage signal VB and a charging current signal IB of the battery 150. The device-side sensing circuit 263 is arranged to operably sense the signal on the power input path (e.g., the signal Vin, Iin, VB, and/or IB) to generate a corresponding input voltage sensing signal Svi and/or an input current sensing signal Sii. The device-side control circuit 265 is coupled with the device-side connector 140, the input switch 261, and the device-side sensing circuit 263. The device-side control circuit 265 is arranged to operably control the input switch 261 based on the sensing result of the device-side sensing circuit 263 in respect of the signal on the power input path, to prevent the magnitude of the charging voltage signal VB and/or the charging current signal IB of the battery 150 to exceed a safety level. In addition, the device-side control circuit 265 is also capable of generating and transmitting the data signal DATA to the charger-side control circuit 219 through the device-side connector 140, the charging cable 130, and the communication interface 213 based on the sensing result of the device-side sensing circuit 263 in respect of the signal on the power input path.

In practice, the device-side sensing circuit 263 may be coupled with the signal path between the device-side connector 140 and the input switch 261 to sense the signal (e.g., signal Vin and/or signal Iin) on the signal path between the device-side connector 140 and the input switch 261. The device-side sensing circuit 263 may be coupled with the signal path between the input switch 261 and the battery 150 to sense the signal (e.g., signal VB and/or signal IB) on the signal path between the input switch 261 and the battery 150.

Additionally, different functional blocks of the charging control circuit 160 may be realized with separate circuits, or may be integrated into a single circuit chip. For example, the device-side sensing circuit 263 may be instead arranged outside the charging control circuit 160 (e.g., arranged on a circuit board connecting with the charging control circuit 160) while the other functional blocks of the charging control circuit 160 are integrated into a single chip.

For simplicity of illustration, other components in the adaptive power converter 110, the charging cable 130, and the charging control circuit 160, and their connection relationships are not illustrated in FIG. 2.

In practice, the mobile charger 102 may be implemented as a power adapter, a mobile power bank, a car charger, or any other device capable of supplying programmable DC voltage and current in response to the instruction of the mobile device 104.

Additionally, the mobile device 104 may be realized with various portable electronic devices, such as a mobile phone, a tablet PC, a notebook computer, a netbook computer, a portable video display, or the like.

The charging cable 130 typically has a certain parasitic resistance, and the value of the parasitic resistance is correlated with the length of the charging cable 130. Accordingly, the voltage and/or current actually received by the mobile device 104 is lower than the DC voltage and DC current generated by the adaptive power converter 110. In addition, different the charging cable 130 causes different voltage drop, and the same charging cable 130 may has different voltage drop in different life stages or in different operating environments.

In order to offer the user replacement flexibility of the charging cable 130 while maintaining the safety during the charging process, the adaptive power converter 110 or the charging control circuit 160 is arranged to dynamically estimate the voltage drop of the charging cable 130 based on the sensing result in respect of the signal on the power input path (e.g., signal Vin, Iin, VB, and/or IB). Then the adaptive power converter 110 or the charging control circuit 160 may further instruct the power converting circuit 211 to adjust the magnitude of the DC voltage signal Vdc and the DC current signal Idc based on the voltage drop estimation, so as to control the voltage drop of the charging cable 130 to be less than a predetermined threshold.

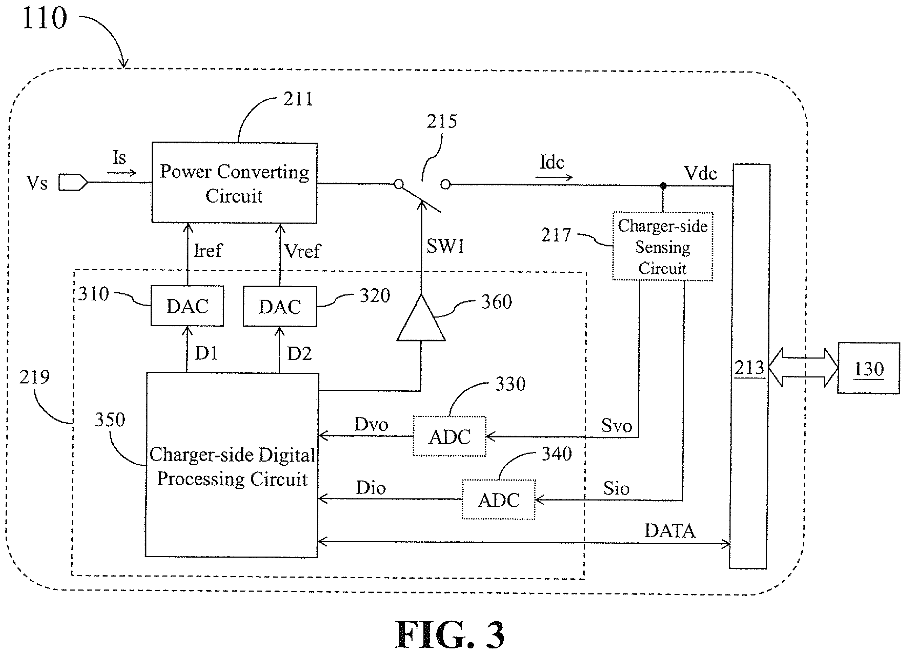

Please refer to FIG. 3 and FIG. 4, which show simplified functional block diagrams of the adaptive power converter 110 in FIG. 2 according to different embodiments of the present disclosure.

In the embodiment of FIG. 3, the charger-side control circuit 219 of the adaptive power converter 110 comprises a first DAC (digital-to-analog converter) 310, a second DAC 320, a first charger-side ADC (analog-to-digital converter) 330, a second charger-side ADC 340, and charger-side digital processing circuit 350.

The first DAC 310 is coupled with the power converting circuit 211, and arranged to operably generate a reference current signal Iref according to a first digital value D1 and to operably utilize the reference current signal Iref to control the power converting circuit 211 to adjust the magnitude of the DC current signal Idc. The second DAC 320 is coupled with the power converting circuit 211, and arranged to operably generate a reference voltage signal Vref according to a second digital value D2 and to operably utilize the reference voltage signal Vref to control the power converting circuit 211 to adjust the magnitude of the DC voltage signal Vdc. The first charger-side ADC 330 is coupled between the charger-side sensing circuit 217 and the charger-side digital processing circuit 350, and arranged to convert the output voltage sensing signal Svo into an output voltage sensing value Dvo. The second charger-side ADC 340 is coupled between the charger-side sensing circuit 217 and the charger-side digital processing circuit 350, and arranged to operably convert the output current sensing signal Sio into an output current sensing value Dio. The charger-side digital processing circuit 350 is coupled with the communication interface 213, the first DAC 310, and the second DAC 320. The charger-side digital processing circuit 350 is capable of calculating a charger-side voltage value CSV based on the output voltage sensing value Dvo and calculating a charger-side current value CSI based on the output current sensing value Dio.

The charger-side control circuit 219 of the embodiment of FIG. 4 comprises the first DAC 310, the second DAC 320, and the first charger-side ADC 330 mentioned above, and a charger-side multiplexer 440, but connection of the first charger-side ADC 330 of FIG. 4 is different from the embodiment of FIG. 3.

In the embodiment of FIG. 4, the charger-side multiplexer 440 is coupled with the charger-side sensing circuit 217, and arranged to selectively output the output voltage sensing signal Svo or the output current sensing signal Sio under control of a charger-side selection signal M1. The first charger-side ADC 330 is coupled between the charger-side multiplexer 440 and the charger-side digital processing circuit 350, and arranged to operably convert the output signal of the charger-side multiplexer 440 into a corresponding charger-side sensing value Dout. The charger-side digital processing circuit 350 is capable of generating the charger-side selection signal M1 for switching the output signal of the charger-side multiplexer 440, and capable of calculating the charger-side voltage value CSV or the charger-side current value CSI based on the charger-side sensing value Dout.

For example, when the charger-side multiplexer 440 outputs the output voltage sensing signal Svo to the first charger-side ADC 330, the charger-side digital processing circuit 350 may calculate the charger-side voltage value CSV based on the charger-side sensing value Dout generated by the first charger-side ADC 330. When the charger-side multiplexer 440 outputs the output current sensing signal Sio to the first charger-side ADC 330, the charger-side digital processing circuit 350 may calculate the charger-side current value CSI based on the charger-side sensing value Dout generated by the first charger-side ADC 330.

In the adaptive power converter 110, the power converting circuit 211 may adopt various existing current loop control mechanism to control the magnitude of the DC current signal Idc based on the reference current signal Iref. Similarly, the power converting circuit 211 may adopt various existing voltage loop control mechanism to control the magnitude of the DC voltage signal Vdc based on the reference voltage signal Vref. In practice, the power converting circuit 211 may perform only one of the aforementioned current loop control mechanism and voltage loop control mechanism at a time instead of simultaneously performing both mechanisms, so as to simplify the circuitry control complexity.

The charger-side digital processing circuit 350 is capable of adjusting the first digital value D1 or the second digital value D2 based on the content of the data signal DATA transmitted from the communication interface 213, the charger-side voltage value CSV, and/or the charger-side current value CSI, and capable of generating a charger-side switch signal SW1 to control the switching operation of the output switch 215.

The charger-side digital processing circuit 350 may adjust the first digital value D1 or the second digital value D2 based on the content of the data signal DATA, the charger-side voltage value CSV, and/or the charger-side current value CSI to thereby adjust the magnitude of the reference voltage signal Vref or the reference current signal Iref, so as to conduct a close loop control within the charger-side control circuit 219. As a result, the accuracy of the DC current signal Idc and the DC voltage signal Vdc generated by the power converting circuit 211 can be further increased.

In some embodiments, the charger-side digital processing circuit 350 may transmit the charger-side voltage value CSV or the charger-side current value CSI to the device-side control circuit 265 of the mobile device 104 through the data signal DATA.

In practice, a charger-side driver circuit 360 may be arranged between the charger-side digital processing circuit 350 and the output switch 215 to drive the charger-side switch signal SW1.

Please refer to FIG. 5 and FIG. 6, which show simplified functional block diagrams of the charging control circuit 160 in FIG. 2 according to different embodiments of the present disclosure.

In the embodiment of FIG. 5, the device-side control circuit 265 of the charging control circuit 160 comprises a first device-side ADC 510, a second device-side ADC 520, and a device-side digital processing circuit 530. The first device-side ADC 510 is coupled with the device-side sensing circuit 263, and arranged to operably convert the input voltage sensing signal Svi into a corresponding input voltage sensing value Dvi. The second device-side ADC 520 is coupled with the device-side sensing circuit 263, and arranged to operably convert the input current sensing signal Sii into a corresponding input current sensing value Dii. The device-side digital processing circuit 530 is coupled with the device-side connector 140, the input switch 261, the first device-side ADC 510, and the second device-side ADC 520. The device-side digital processing circuit 530 is capable of calculating the device-side voltage value DSV based on the input voltage sensing value Dvi and calculating the device-side current value DSI based on the input current sensing value Dii.

The device-side control circuit 265 of the embodiment of FIG. 6 comprises the first device-side ADC 510 and the device-side digital processing circuit 530 mentioned above and a device-side multiplexer 620, but the connection of the first device-side ADC 510 of FIG. 6 is different from the embodiment of FIG. 5.

In the embodiment of FIG. 6, the device-side multiplexer 620 is coupled with the device-side sensing circuit 263, and arranged to selectively output the input voltage sensing signal Svi or the input current sensing signal Sii under control of a device-side selection signal M2. The first device-side ADC 510 is coupled with the output terminal of the device-side multiplexer 620, and arranged to operably convert the output signal of the device-side multiplexer 620 into a corresponding device-side sensing value Din. The device-side digital processing circuit 530 is capable of generating the device-side selection signal M2 for switching the output signal of the device-side multiplexer 620, and capable of calculating the device-side voltage value DSV or the device-side current value DSI based on the device-side sensing value Din.

For example, when the device-side multiplexer 620 outputs the input voltage sensing signal Svi to the first device-side ADC 510, device-side digital processing circuit 530 may calculate the device-side voltage value DSV based on the device-side sensing value Din generated by the first device-side ADC 510. When the device-side multiplexer 620 outputs the input current sensing signal Sii to the first device-side ADC 510, device-side digital processing circuit 530 may calculate the device-side current value DSI based on the device-side sensing value Din generated by the first device-side ADC 510.

In the charging control circuit 160, the device-side digital processing circuit 530 is capable of generating the device-side switch signal SW2 for controlling the input switch 261 based on the device-side voltage value DSV or the device-side current value DSI to thereby control the magnitude of the charging voltage signal VB and the charging current signal IB of the battery 150.

For example, when the device-side digital processing circuit 530 determines that the charging voltage signal VB or the charging current signal IB exceeds (or below) an acceptable range based on the device-side voltage value DSV or the device-side current value DSI, the device-side digital processing circuit 530 may utilize the device-side switch signal SW2 to turn off the input switch 261. When the battery 150 is fully charged or charged to a predetermined level, the device-side digital processing circuit 530 may utilize the device-side switch signal SW2 to turn off the input switch 261 to avoid the battery 150 to be over charged.

In some embodiments, the device-side digital processing circuit 530 may use the device-side voltage value DSV or the device-side current value DSI to conduct related judgement to generate the data signal DATA, or may transmit the device-side voltage value DSV or the device-side current value DSI to the charger-side control circuit 219 of the adaptive power converter 110 through the data signal DATA.

In operations, the device-side control circuit 265 may turn off the input switch 261 when the device-side voltage value DSV exceeds a threshold voltage value or when the device-side current value DSI exceeds a threshold current value to protect the battery 150 and related circuits.

In practice, a device-side driver circuit 540 may be arranged between the device-side digital processing circuit 530 and the input switch 261 to drive the device-side switch signal SW2.

The actual operating environment of the mobile device charging system 100 is mainly determined by the user's demand and habit. Therefore, some foreign objects may enter the opening of the device-side connector 140 of the mobile device 104 due to the operating environment issues. For example, when the user put the mobile device charging system 100 in the pocket, backpack, or handbag, the floss, hair, textile fiber, or other tiny object may enter the opening of the device-side connector 140 and contact with the conducting pins of the device-side connector 140.

Once the foreign object is conductive, an abnormal current path may occur at the opening of the device-side connector 140 and cause leakage current.

For example, FIG. 7 shows a simplified functional block diagram of the mobile device charging system 100 when a foreign object presents therein according to one embodiment of the present disclosure. As shown in FIG. 7, when a foreign object 710 contacts with the conducting pins of the device-side connector 140 due to some causes, an abnormal current path may be formed at the opening of the device-side connector 140 and result in a leakage current Ifb to occur in the device-side connector 140. When the leakage current Ifb is too large, it may overheat the device-side connector 140, the output terminal 120, or other neighboring components or objects, and thus cause safety concerns.

In order to increase the safety during the charging process, the adaptive power converter 110 or the charging control circuit 160 is capable of dynamically determining whether any abnormal leakage current exists in the power transmission path between the mobile charger 102 and the mobile device 104 (e.g., at the device-side connector 140) based on the sensing result in respect of the signal on the power input path (e.g., the signal Vin, Iin, VB, and/or IB).

The operations of the mobile device charging system 100 will be further described in more details by reference to FIG. 8. FIG. 8 shows a simplified flowchart of a mobile device charging method according to the present disclosure.

When the output terminal 120 of the mobile charger 102 is coupled with the device-side connector 140 of the mobile device 104, the charging control circuit 160 and the adaptive power converter 110 may communicate through the charging cable 130 to conduct one-way or two-way communications.

When the charging control circuit 160 requires the adaptive power converter 110 to supply power for charging the mobile device 104, the device-side control circuit 265 may perform the operation 810 in FIG. 8.

In the operation 810, the device-side control circuit 265 may transmit related instructions to the charger-side control circuit 219 of the adaptive power converter 110 through the data signal DATA. For example, the device-side digital processing circuit 530 of the device-side control circuit 265 may transmit a target voltage value VTG and/or a target current value ITG to the charger-side digital processing circuit 350 of the charger-side control circuit 219 through the data signal DATA in the operation 810.

Then, the charger-side control circuit 219 performs the operation 820.

In the operation 820, the charger-side control circuit 219 may control the power converting circuit 211 to generate corresponding DC voltage signal Vdc and DC current signal Idc. For example, the charger-side digital processing circuit 350 of the charger-side control circuit 219 may adjust the aforementioned first digital value D1 and second digital value D2 based on the content of the data signal DATA, so as to utilize the reference current signal Iref to control the power converting circuit 211 to adjust the magnitude of the DC current signal Idc, and to utilize the reference voltage signal Vref to control the power converting circuit 211 to adjust the magnitude of the DC voltage signal Vdc.

In the operation 830, the charging cable 130 receives the DC voltage signal Vdc and the DC current signal Idc generated by the power converting circuit 211 through the communication interface 213 to provide the output voltage signal Vout and the output current signal Iout at the output terminal 120.

In the operation 840, the device-side connector 140 receives the power transmitted from the output terminal 120 to form the input voltage signal Vin and the input current signal Iin actually received by the mobile device 104.

In the operation 850, the device-side sensing circuit 263 may sense the signal on the power input path (e.g., signal Vin, Iin, VB, and/or IB) to generate a corresponding sensing result (such as the aforementioned input voltage sensing signal Svi and/or input current sensing signal Sii). In addition, the device-side control circuit 265 may calculate the corresponding device-side voltage value DSV and/or device-side current value DSI based on the sensing result of the device-side sensing circuit 263.

Alternatively, other computing circuit in the mobile device 104 (not shown) may be employed to calculate the corresponding device-side voltage value DSV and/or device-side current value DSI based on the sensing result of the device-side sensing circuit 263, and then the device-side digital processing circuit 530 reads the device-side voltage value DSV and/or the device-side current value DSI from the computing circuit.

In the operation 860, the charger-side control circuit 219 or the device-side control circuit 265 may dynamically estimate the voltage drop of the charging cable 130 based on the device-side voltage value DSV.

In one embodiment, for example, the device-side digital processing circuit 530 of the device-side control circuit 265 transmits the device-side voltage value DSV corresponding to the signal on the power input path to the charger-side control circuit 219 through the data signal DATA in the operation 860. In this situation, the charger-side control circuit 219 may calculate the corresponding charger-side voltage value CSV based on the sensing result of the charger-side sensing circuit 217 (e.g., the aforementioned output voltage sensing signal Svo), and calculate a difference between the charger-side voltage value CSV and the device-side voltage value DSV to generate a voltage drop estimation value of the charging cable 130.

In another configuration, the charger-side control circuit 219 may calculate the corresponding charger-side voltage value CSV based on the sensing result of the charger-side sensing circuit 217 in the operation 860, and then transmit the charger-side voltage value CSV to the device-side digital processing circuit 530 of the device-side control circuit 265 through the data signal DATA. In this situation, the device-side digital processing circuit 530 may calculate a difference between the charger-side voltage value CSV and the device-side voltage value DSV to generate the voltage drop estimation value of the charging cable 130.

In yet another configuration, the device-side digital processing circuit 530 of the device-side control circuit 265 may calculate a difference between the target voltage value VTG and the device-side voltage value DSV in the operation 860 to generate the voltage drop estimation value of the charging cable 130.

In the operation 870, the adaptive power converter 110 may control the power converting circuit 211 to adjust the DC current signal Idc or the DC voltage signal Vdc to thereby control the voltage drop of the charging cable 130 to be less than a predetermined threshold.

For example, in some embodiments where the voltage drop estimation value of the charging cable 130 is generated by the charger-side control circuit 219, the charger-side control circuit 219 may control the power converting circuit 211 to adjust the magnitude of at least one of the DC current signal Idc and the DC voltage signal Vdc based on the voltage drop estimation value in the operation 870 to maintain the voltage drop of the charging cable 130 to be less than the predetermined threshold.

In some configurations where the voltage drop estimation value of the charging cable 130 is generated by the device-side control circuit 265, the device-side digital processing circuit 530 of the device-side control circuit 265 may generate a corresponding adjustment instruction based on the voltage drop estimation value in the operation 870, and then transmit the adjustment instruction to the charger-side control circuit 219 through the data signal DATA. Then, the charger-side control circuit 219 may control the power converting circuit 211 to adjust the magnitude of at least one of the DC current signal Idc and the DC voltage signal Vdc based on the received adjustment instruction to maintain the voltage drop of the charging cable 130 to be less than the predetermined threshold.

In the operation 880, the charger-side control circuit 219 or the device-side control circuit 265 monitor and determine whether abnormal leakage current (e.g., the leakage current Ifb caused by the foreign object 710 at the device-side connector 140) occurs in the power transmission path between the mobile charger 102 and the mobile device 104 based on the device-side current value DSI.

In one embodiment, for example, the device-side digital processing circuit 530 of the device-side control circuit 265 may transmit the device-side current value DSI corresponding to the signal on the power input path to the charger-side control circuit 219 through the data signal DATA in the operation 880. In this situation, the charger-side control circuit 219 may calculate the corresponding charger-side current value CSI based on the sensing result of the charger-side sensing circuit 217 (e.g., the aforementioned output current sensing signal Sio), and utilize the charger-side digital processing circuit 350 to compare the charger-side current value CSI with the device-side current value DSI. If the charger-side current value CSI exceeds the device-side current value DSI by more than a predetermined value, the charger-side digital processing circuit 350 may determine that abnormal leakage current occurs in the power transmission path between the mobile charger 102 and the mobile device 104 (e.g., at the device-side connector 140).

In another embodiment, the charger-side control circuit 219 may calculate the corresponding charger-side current value CSI based on the sensing result of the charger-side sensing circuit 217 in the operation 880, and transmit the charger-side current value CSI to the device-side control circuit 265 through the data signal DATA. In this situation, the device-side digital processing circuit 530 of the device-side control circuit 265 may compare the charger-side current value CSI with the device-side current value DSI. If the charger-side current value CSI exceeds the device-side current value DSI by more than a predetermined value, the device-side digital processing circuit 530 may determine that abnormal leakage current occurs in the power transmission path between the mobile charger 102 and the mobile device 104 (e.g., at the device-side connector 140).

In yet another embodiment, the device-side digital processing circuit 530 of the device-side control circuit 265 may compare the aforementioned target current value ITG with the device-side current value DSI in the operation 880. If the target current value ITG exceeds the device-side current value DSI by more than a predetermined value, the device-side digital processing circuit 530 may determine that abnormal leakage current occurs in the power transmission path between the mobile charger 102 and the mobile device 104 (e.g., at the device-side connector 140).

When the mobile device charging system 100 determines that abnormal leakage current occurs in the power transmission path between the mobile charger 102 and the mobile device 104 in the operation 880, it may proceed to the operation 890; otherwise, it may return to the aforementioned operation 850 to continue monitoring the signal on the power input path.

In the operation 890, the adaptive power converter 110 may turn off the output switch 215 or control the power converting circuit 211 to lower the DC current signal Idc or the DC voltage signal Vdc to reduce the output voltage signal Vout or the output current signal Iout, to thereby reduce or eliminate the leakage current to avoid possible danger that may be caused by the leakage current.

For example, in some embodiments where the charger-side control circuit 219 is employed to determine whether leakage current occurs, the charger-side digital processing circuit 350 in the operation 890 may adjust the charger-side switch signal SW1 to turn off the output switch 215 or control the power converting circuit 211 to lower the magnitude of at least one of the DC current signal Idc and the DC voltage signal Vdc to thereby reduce the magnitude of at least one of the output voltage signal Vout and the output current signal Iout.

In some embodiments where the device-side control circuit 265 is employed to determine whether leakage current occurs, the device-side digital processing circuit 530 in the operation 890 may generate a decrease instruction and transmit the decrease instruction to the charger-side control circuit 219 through the data signal DATA. The charger-side digital processing circuit 350 may adjust the charger-side switch signal SW1 to turn off the output switch 215 or control the power converting circuit 211 to lower the magnitude of at least one of the DC current signal Idc and the DC voltage signal Vdc to thereby reduce the magnitude of at least one of the output voltage signal Vout and the output current signal Iout based on the decrease instruction transmitted from the device-side control circuit 265.

Please refer to FIG. 9 and FIG. 10. FIG. 9 shows a simplified schematic diagram of a mobile device charging system 900 according to another embodiment of the present disclosure. FIG. 10 shows a simplified functional block diagram of the mobile device charging system 900 according to one embodiment of the present disclosure.

The mobile device charging system 900 is similar with the mobile device charging system 100, but the mobile charger 902 of the mobile device charging system 900 further comprises a receiving terminal 920 and a charger-side connector 940.

As shown in FIG. 10, the charger-side connector 940 is coupled with the communication interface 213 of the adaptive power converter 110, and is capable of detachably connecting with the receiving terminal 920. The charging cable 130 of the mobile charger 902 is coupled between the receiving terminal 920 and the output terminal 120, and capable of receiving the DC voltage signal Vdc and the DC current signal Idc generated by the power converting circuit 211 through the receiving terminal 920, the charger-side connector 940, and the communication interface 213.

In other words, the charging cable 130 of the mobile device charging system 900 is indirectly connected with the adaptive power converter 110 through the receiving terminal 920 and the charger-side connector 940, instead of directly connecting with the adaptive power converter 110. Accordingly, the charging cable 130 can be separate from the adaptive power converter 110.

The foregoing descriptions regarding the connections, implementations, operations, and related advantages of other corresponding functional blocks in FIG. 1 through FIG. 8 are also applicable to the embodiment of FIG. 9 and FIG. 10. For the sake of brevity, those descriptions will not be repeated here.

Similar with the mobile device charging system 100, the charger-side control circuit 219 or the device-side control circuit 265 of the mobile device charging system 900 is capable of dynamically estimating the voltage drop of the charging cable 130, and then instructing the adaptive power converter 110 to adjust the magnitude of the output DC voltage signal and/or the output DC current signal based on the voltage drop estimation value, so as to control the voltage drop of the charging cable 130 to be less than the predetermined threshold. Accordingly, even the charging cable 130 is replaced by another charging cable with different specifications, the voltage and current supplied from the mobile charger 902 to the mobile device 104 can be maintain in the safe range, without causing overheat problem due to the replacement of the charging cable.

As a result, the user is allowed to replace the charging cable to cooperate with the adaptive power converter 110. For example, the user is allowed to replace the original charging cable 130 with a charging cable having a longer length, capable of carrying larger current, or made by the more reliable materials.

Obviously, the architecture of the aforementioned the mobile device charging system 900 offer more replacement flexibility of the charging cable 130 to the user, thereby greatly improving the usage convenience and application scope of the adaptive power converter 110.

In addition, similar to the mobile device charging system 100, the charger-side control circuit 219 or the device-side control circuit 265 of the mobile device charging system 900 is capable of dynamically determining whether abnormal leakage current occurs in the power transmission path between the mobile charger 102 and the mobile device 104. Accordingly, when the foreign object presents at the device-side connector 140 or the charger-side connector 940 and causes leakage current, the mobile device charging system 900 may perform the aforementioned operation 890 to utilize the adaptive power converter 110 to turn off the output switch 215 or to control the power converting circuit 211 to lower the DC current signal Idc/the DC voltage signal Vdc, so as to reduce the output voltage signal Vout/the output current signal Iout, thereby reducing or eliminating the leakage current.

It can be appreciated from the foregoing descriptions that the mobile chargers 102 and 902 is capable of supplying larger output current signal Iout to the mobile device 104, to thus the charging speed of the mobile device 104 can be effectively increased.

In addition, since the adaptive power converter 110 adaptively adjusts the magnitudes of the DC voltage signal Vdc and the DC current signal Idc based on the instruction of the charging control circuit 160, the mobile chargers 102 and 902 can be employed to charge various types of mobile devices, and thus have a very wide application scope.

Furthermore, since the adaptive power converter 110 or the charging control circuit 160 is capable of dynamically estimating the voltage drop of the charging cable 130 and then conducting adaptive operation to control the voltage drop of the charging cable 130 to be less than the predetermined threshold, different charging cable is thus allowed to be employed to cooperate with the adaptive power converter 110, thereby improving the selection flexibility of the charging cable and also increasing the safety, convenience, and application scope of the mobile chargers 102 and 902.

Additionally, the adaptive power converter 110 or the charging control circuit 160 is also capable of automatically determining whether abnormal leakage current occurs in the power transmission path between the mobile charger 102 and the mobile device 104 or not, and then conducting corresponding operation. Hence, the safety during the charging process can be effectively ensured, thereby lowering the danger when using large current to charge the mobile device.

Please note that the executing order of the operations in FIG. 8 is merely exemplary rather than a restriction to practical implementations. For example, the operations 880 and 890 may be instead performed before the operation 860. In some implementations, the operations 880 and 890 may be omitted while reserving the operations 860 and 870. In other implementations, the operations 860 and 870 may be omitted while reserving the operations 880 and 890.

In addition, the output switch 215, the charger-side driver circuit 360, and/or the device-side driver circuit 540 may be omitted in some embodiments to simplify the circuitry complexity.

Certain terms are used throughout the description and the claims to refer to particular components. One skilled in the art appreciates that a component may be referred to as different names. This disclosure does not intend to distinguish between components that differ in name but not in function. In the description and in the claims, the term "comprise" is used in an openended fashion, and thus should be interpreted to mean "include, but not limited to." The tem "couple" is intended to compass any indirect or direct connection. Accordingly, if this disclosure mentioned that a first device is coupled with a second device, it means that the first device may be directly or indirectly connected to the second device through electrical connections, wireless communications, optical communications, or other signal connections with/without other intermediate devices or connection means.

The term "and/or" may comprise any and all combinations of one or more of the associated listed items. In addition, the singular forms "a," "an," and "the" herein are intended to comprise the plural forms as well, unless the context clearly indicates otherwise.

The term "voltage signal" used throughout the description and the claims may be expressed in the format of a current in implementations, and the term "current signal" used throughout the description and the claims may be expressed in the format of a voltage in implementations.

The invention is defined by claim 1. The present disclosure can be summarized as a mobile device charging system including a mobile charger and a mobile device. The mobile charger includes: an adaptive power converter for receiving data signals and generating a DC signal; an output terminal; and a charging cable for transmitting the data signals and receiving the DC signal to provide an output signal at the output terminal. The mobile device includes: a device-side connector for receiving power transmitted from the output terminal; and a charging control circuit for generating and transmitting the data signals to the adaptive power converter through the device-side connector and the charging cable. The adaptive power converter adjusts the magnitude of the DC signal according to the data signals to control the voltage drop of the charging cable to be less than a predetermined threshold.

## Claims

1. An adaptive power converter (110) for a mobile charger (102; 902) configured for charging a mobile device (104), wherein the mobile device (104) comprises a device-side connector (140) and a battery (150), and a power input path is arranged between the device-side connector (140) and the battery (150), the adaptive power converter (110) comprising:
a power converting circuit (211), arranged to operably convert a source voltage signal (Vs) and a source current signal (Is) into a DC voltage signal (Vdc) and a DC current signal (Idc);
a communication interface (213), arranged to operably receive and transmit a data signal (DATA), to operably receive the DC voltage signal (Vdc) and the DC current signal (Idc) through a power output path arranged between the power converting circuit (211) and the communication interface (213), and to operably output the DC voltage signal (Vdc) and the DC current signal (Idc) to a charging cable (130), such that the charging cable (130) provides an output voltage signal (Vout) and an output current signal (Iout) to an output terminal (120) detachably connected with the device-side connector (140) when receiving the DC voltage signal (Vdc) and the DC current signal (Idc);
a charger-side control circuit (219), coupled with the power converting circuit (211) and the communication interface (213), arranged to operably receive the data signal (DATA) and to operably control operations of the power converting circuit (211); and
a charger-side sensing circuit (217), coupled with the charger-side control circuit (219) and arranged to operably sense a signal on the power output path (Vdc; Idc);
wherein the charger-side control circuit (219) is arranged to operably generate a corresponding charger-side voltage value (CSV) based on a sensing result of the charger-side sensing circuit (217), and when the mobile device (104) transmits a device-side voltage value (DSV) corresponding to the signal on the power input path (Vin; Iin; VB; IB) to the charger-side control circuit (219) through the data signal (DATA), the charger-side control circuit (219) is arranged to operably calculate a difference between the charger-side voltage value (CSV) and the device-side voltage value (DSV) to generate a voltage drop estimation value of the charging cable (130);
**characterized in that** the charger-side control circuit (219) is further arranged to operably control the power converting circuit (211) to maintain the output voltage signal (Vout) and the output current signal (Iout) supplied to the mobile device (104) in a safe range by adjusting the magnitude of at least one of the DC current signal (Idc) and the DC voltage signal (Vdc) based on the voltage drop estimation value so as to control a voltage drop of the charging cable (130) to be less than a predetermined threshold.

2. The adaptive power converter (110) of claim 1, **characterized by**:
when the mobile device (104) transmits a device-side current value (DSI) corresponding to the signal on the power input path (Vin; Iin; VB; IB) to the charger-side control circuit (219) through the data signal (DATA), the charger-side control circuit (219) is arranged to operably calculate a corresponding charger-side current value (CSI) based on the sensing result of the charger-side sensing circuit (217) and to operably compare the charger-side current value (CSI) with the device-side current value (DSI);
wherein if the charger-side current value (CSI) exceeds the device-side current value (DSI) by more than a predetermined value, the charger-side control circuit (219) is configured to control the power converting circuit (211) to lower the magnitude of at least one of the DC current signal (Idc) and the DC voltage signal (Vdc), so as to reduce magnitude of at least one of the output voltage signal (Vout) and the output current signal (Iout).

3. The adaptive power converter (110) of claim 1, **characterized by** further comprising:
an output switch (215), positioned on the power output path and controlled by the charger-side control circuit (219);
wherein when the mobile device (104) transmits a device-side current value (DSI) corresponding to the signal on the power input path (Vin; Iin; VB; IB) to the charger-side control circuit (219) through the data signal (DATA), the charger-side control circuit (219) is arranged to operably calculate a corresponding charger-side current value (CSI) based on sensing result of the charger-side sensing circuit (217) and to operably compare the charger-side current value (CSI) with the device-side current value (DSI), and if the charger-side current value (CSI) exceeds the device-side current value (DSI) by more than a predetermined value, the charger-side control circuit (219) is configured to turn off the output switch (215) to reduce the magnitude of at least one of the output voltage signal (Vout) and the output current signal (Iout).

4. The adaptive power converter (110) of claim 1, **characterized by**:
the charger-side control circuit (219) being arranged to operably calculate a corresponding charger-side current value (CSI) based on the sensing result of the charger-side sensing circuit (217) and transmitting the charger-side current value (CSI) to the mobile device (104) through the data signal (DATA), wherein the mobile device (104) is capable of comparing the charger-side current value (CSI) with a device-side current value (DSI) corresponding to the signal on the power input path (Vin; Iin; VB; IB);
wherein if the charger-side current value (CSI) exceeds the device-side current value (DSI) by more than a predetermined value, the mobile device (104) generates a decrease instruction and transmits the decrease instruction to the charger-side control circuit (219) through the data signal (DATA), and the charger-side control circuit (219) is configured to control the power converting circuit (211) to lower the magnitude of at least one of the DC current signal (Idc) and the DC voltage signal (Vdc) according to the decrease instruction, so as to reduce magnitude of at least one of the output voltage signal (Vout) and the output current signal (Iout).

5. The adaptive power converter (110) of claim 1, **characterized by** further comprising:
an output switch (215), positioned on the power output path and controlled by the charger-side control circuit (219);
wherein the charger-side control circuit (219) is arranged to operably calculate a corresponding charger-side current value (CSI) based on sensing result of the charger-side sensing circuit (217) and transmitting the charger-side current value (CSI) to the mobile device (104) through the data signal (DATA), wherein the mobile device (104) is capable of comparing the charger-side current value (CSI) with a device-side current value (DSI) corresponding to the signal on the power input path (Vin; Iin; VB; IB);
wherein if the charger-side current value (CSI) exceeds the device-side current value (DSI) by more than a predetermined value, the mobile device (104) generates a decrease instruction and transmits the decrease instruction to the charger-side control circuit (219) through the data signal (DATA), and the charger-side control circuit (219) is configured to turn off the output switch (215) according to the decrease instruction to reduce the magnitude of at least one of the output voltage signal (Vout) and the output current signal (Iout).

6. The adaptive power converter (110) of claim 1, wherein the mobile device (104) is capable of comparing a target current value (ITG) with a device-side current value (DSI) corresponding to the signal on the power input path (Vin; Iin; VB; IB); wherein if the target current value (ITG) exceeds the device-side current value (DSI) by more than a predetermined value, the mobile device (104) generates a decrease instruction and transmits the decrease instruction to the charger-side control circuit (219) through the data signal (DATA), and the charger-side control circuit (219) is configured to control the power converting circuit (211) to lower the magnitude of at least one of the DC current signal (Idc) and the DC voltage signal (Vdc) according to the decrease instruction, so as to reduce the magnitude of at least one of the output voltage signal (Vout) and the output current signal (Iout).

7. The adaptive power converter (110) of claim 1, **characterized by** further comprising:
an output switch (215), positioned on the power output path and controlled by the charger-side control circuit (219);
wherein the mobile device (104) is capable of comparing a target current value (ITG) with a device-side current value (DSI) corresponding to the signal on the power input path (Vin; Iin; VB; IB), and if the target current value (ITG) exceeds the device-side current value (DSI) by more than a predetermined value, the mobile device (104) generates a decrease instruction and transmits the decrease instruction to the charger-side control circuit (219) through the data signal (DATA), and the charger-side control circuit (219) is configured to turn off the output switch (215) according to the decrease instruction to reduce the magnitude of at least one of the output voltage signal (Vout) and the output current signal (Iout).

8. The adaptive power converter (110) of claim 1, **characterized in that** the charger-side control circuit (219) is arranged to operably generate a reference voltage signal (Vref) and a reference current signal (Iref) based on the content of the data signal (DATA), and to operably utilize the reference voltage signal (Vref) and the reference current signal (Iref) to control the power converting circuit (211) to respectively adjust the magnitude of the DC voltage signal (Vdc) and the magnitude of the DC current signal (Idc).

9. The adaptive power converter (110) of claim 8, **characterized in that** the charger-side control circuit (219) comprises:
a first DAC (310), coupled with the power converting circuit (211), arranged to operably generate the reference current signal (Iref) according to a first digital value (D1), and to operably utilize the reference current signal (Iref) to control the power converting circuit (211) to adjust the magnitude of the DC current signal (Idc);
a second DAC (320), coupled with the power converting circuit (211), arranged to operably generate the reference voltage signal (Vref) according to a second digital value (D2), and to operably utilize the reference voltage signal (Vref) to control the power converting circuit (211) to adjust the magnitude of the DC voltage signal (Vdc); and
a charger-side digital processing circuit (350), coupled with the communication interface (213), the first DAC (310), and the second DAC (320), arranged to operably adjust at least one of the first digital value (D1) and the second digital value (D2) based on content of the data signal (DATA) transmitted from the communication interface (213).

10. The adaptive power converter (110) of claim 9, **characterized by**:
the charger-side sensing circuit (217) is arranged to operably sense the signal on the power output path (Vdc; Idc) to generate an output voltage sensing signal (Svo) and an output current sensing signal (Sio);
wherein the charger-side control circuit (219) further comprises:
a first charger-side ADC (330), coupled between the charger-side sensing circuit (217) and the charger-side digital processing circuit (350), arranged to operably convert the output voltage sensing signal (Svo) into an output voltage sensing value (Dvo); and
a second charger-side ADC (340), coupled between the charger-side sensing circuit (217) and the charger-side digital processing circuit (350), arranged to operably convert the output current sensing signal (Sio) into an output current sensing value (Dio);
wherein the charger-side digital processing circuit (350) is arranged to operably calculate a charger-side voltage value (CSV) based on the output voltage sensing value (Dvo), to operably calculate a charger-side current value (CSI) based on the output current sensing value (Dio), and to operably adjust the first digital value (D1) or the second digital value (D2) according to the charger-side voltage value (CSV) or the charger-side current value (CSI).

11. The adaptive power converter (110) of claim 10, **characterized by** further comprising:
an output switch (215), positioned on the power output path and controlled by the charger-side digital processing circuit (350);
wherein the charger-side digital processing circuit (350) is arranged to operably reduce the magnitude of at least one of the output voltage signal (Vout) and the output current signal (Iout) by turning off the output switch (215).

12. The adaptive power converter (110) of claim 9, **characterized by**:
the charger-side sensing circuit (217) is arranged to operably sense signal on the power output path (Vdc; Idc) to generate an output voltage sensing signal (Svo) and an output current sensing signal (Sio);
wherein the charger-side control circuit (219) further comprises:
a charger-side multiplexer (440), coupled with the charger-side sensing circuit (217), arranged to selectively output the output voltage sensing signal (Svo) or the output current sensing signal (Sio) under control of a charger-side selection signal (M1); and
a first charger-side ADC (330), coupled between the charger-side multiplexer (440) and the charger-side digital processing circuit (350), arranged to operably convert an output signal of the charger-side multiplexer (440) into a corresponding charger-side sensing value (Dout);
wherein the charger-side digital processing circuit (350) is arranged to operably generate the charger-side selection signal (M1), to operably calculate a charger-side voltage value (CSV) or a charger-side current value (CSI) based on the charger-side sensing value (Dout), and to operably adjust the first digital value (D1) or the second digital value (D2) according to the charger-side voltage value (CSV) or the charger-side current value (CSI).

13. The adaptive power converter (110) of claim 12, **characterized by** further comprising:
an output switch (215), positioned on the power output path and controlled by the charger-side digital processing circuit (350);
wherein the charger-side digital processing circuit (350) is arranged to operably reduce the magnitude of at least one of the output voltage signal (Vout) and the output current signal (Iout) by turning off the output switch (215).

14. The adaptive power converter (110) of claim 9, **characterized in that** the charger-side digital processing circuit (350) is arranged to operably transmit a charger-side voltage value (CSV) or a charger-side current value (CSI) corresponding to signal on the power output path (Vdc; Idc) to the mobile device (104) through the data signal (DATA).

15. The adaptive power converter (110) of any one of claims 1-14, wherein the mobile charger (902) further comprises:
a receiving terminal (920); and
a charger-side connector (940), configured to be coupled with the communication interface (213) and capable of detachably connecting with the receiving terminal (920); wherein the charging cable (130) is configured to be coupled between the receiving terminal (920) and the output terminal (120), and to receive the DC voltage signal (Vdc) and the DC current signal (Idc) through the receiving terminal (920), the charger-side connector (940), and the communication interface (213).

## Patentansprüche

1. Adaptiver Stromrichter (110) für ein mobiles Ladegerät (102; 902) konfiguriert, um ein Mobilgerät (104) zu laden, wobei das Mobilgerät (104) einen geräteseitigen Verbinder (140) und eine Batterie (150) umfasst, und ein Leistungseingangspfad zwischen dem geräteseitigen Verbinder (140) und der Batterie (150) eingerichtet ist, wobei der adaptive Stromrichter (110) umfasst:
eine Stromrichterschaltung (211), die eingerichtet ist, um ein Quellenspannungssignal (Vs) und ein Quellenstromsignal (Is) betriebsmäßig in ein DC-Spannungssignal (Vdc) und ein DC-Stromsignal (Idc) umzuwandeln;
eine Kommunikationsschnittstelle (213), die ausgebildet ist, um ein Datensignal (DATA) betriebsmäßig zu empfangen, um das DC-Spannungssignal (Vdc) und das DC-Stromsignal (Idc) durch einen zwischen der Stromrichterschaltung (211) und der Kommunikationsschnittstelle (213) eingerichteten Leistungsausgabepfad zu empfangen und zu übertragen, und um das DC-Spannungssignal (Vdc) und das DC-Stromsignal (Idc) an ein Ladekabel (130) betriebsmäßig auszugeben, sodass das Ladekabel (130) ein Ausgangsspannungssignal (Vout) und ein Ausgangsstromsignal (Iout) an einem Ausgangsanschluss (120) bereitstellt, der lösbar mit dem geräteseitigen Verbinder (140) verbunden ist, wenn das DC-Spannungssignal (Vdc) und das DC-Stromsignal (Idc) empfangen werden;
eine ladegeräteseitige Steuerschaltung (219), die mit der Stromrichterschaltung (211) und der Kommunikationsschnittstelle (213) gekoppelt ist, um das Datensignal (DATA) betriebsmäßig zu empfangen und Steuervorgänge der Stromrichterschaltung (211) betriebsmäßig zu steuern; und
eine ladegeräteseitige Erfassungsschaltung (217), die mit der ladegeräteseitigen Steuerschaltung (219) gekoppelt ist und eingerichtet ist, ein Signal auf dem Leistungsausgabepfad (Vdc; Idc) betriebsmäßig zu erfassen;
wobei die ladegeräteseitige Steuerschaltung (219) eingerichtet ist, um betriebsmäßig einen entsprechenden ladegeräteseitigen Spannungswert (CSV) basierend auf einem Erfassungsergebnis der ladegeräteseitigen Erfassungsschaltung (217) zu erzeugen, und wenn das Mobilgerät (104) einen geräteseitigen Spannungswert (DSV) entsprechend dem Signal auf dem Leistungseingangspfad (Vin; Iin; VB; IB) an die ladegeräteseitige Steuerschaltung (219) durch das Datensignal (DATA) überträgt, die ladegeräteseitige Steuerschaltung (219) eingerichtet ist, um betriebsmäßig eine Differenz zwischen dem ladegeräteseitigen Spannungswert (CSV) und dem geräteseitigen Spannungswert (DSV) zu berechnen, um einen Spannungsabfallschätzwert des Ladekabels (130) zu erzeugen;
**dadurch gekennzeichnet, dass** die ladegeräteseitige Steuerschaltung (219) ferner eingerichtet ist, um die Stromrichterschaltung (211) betriebsmäßig zu steuern, um das Ausgangsspannungssignal (Vout) und das Ausgangsstromsignal (Iout), der an das Mobilgerät (104) geliefert wird in einem sicheren Bereich durch Einstellen der Größe von mindestens einem von dem DC-Stromsignal (Idc) und dem DC-Spannungssignal (Vdc) basierend auf dem Spannungsabfallschätzwert aufrechtzuerhalten, um einen Spannungsabfall des Ladekabels (130) derart zu steuern, dass dieser geringer als eine vorbestimmte Schwelle ist.

2. Adaptiver Stromrichter (110) nach Anspruch 1, **dadurch gekennzeichnet, dass**
wenn das Mobilgerät (104) einen geräteseitigen Stromwert (DSI) entsprechend dem Signal auf dem Leistungseingangspfad (Vin; Iin; VB; IB) an die ladegeräteseitige Steuerschaltung (219) durch das Datensignal (DATA) überträgt, die ladegeräteseitige Steuerschaltung (219) eingerichtet ist einen entsprechenden ladegeräteseitigen Stromwert (CSI) basierend aus dem Erfassungsergebnisse der ladegeräteseitigen Erfassungsschaltung (217) betriebsmäßig zu berechnen und die den ladegeräteseitigen Stromwert (CSI) mit dem geräteseitigen Stromwert (DSI) betriebsmäßig zu vergleichen;
wobei, wenn der ladegeräteseitige Stromwert (CSI) den geräteseitigen Stromwert (DSI) um mehr als einen vorbestimmten Wert übersteigt, die ladegeräteseitige Steuerschaltung (219) konfiguriert ist, die Stromrichterschaltung (211) zu steuern um die Größe von wenigstens einem von dem DC-Stromsignal (Idc) und dem DC-Spannungssignal (Vdc) zu verringern, um die Größe von wenigstens einem von dem Ausgangsspannungssignal (Vout) und dem Ausgangsstromsignal (Iout) zu reduzieren.

3. Adaptiver Stromrichter (110) nach Anspruch 1, **dadurch gekennzeichnet, dass** dieser ferner umfasst:
einen Ausgabeschalter (215), der auf dem Leistungsausgangspfad angeordnet ist und durch die ladegeräteseitige Steuerschaltung (219) gesteuert wird;
wobei, wenn das Mobilgerät (104) einen geräteseitigen Stromwert (DSI) entsprechend dem Signal auf dem Leistungseingangspfad (Vin; Iin; VB; IB) an die ladegeräteseitige Steuerschaltung (219) durch das Datensignal (DATA) überträgt, die ladegeräteseitige Steuerschaltung (219) eingerichtet ist, um einen entsprechenden ladegeräteseitigen Stromwert (CSI) basierend auf dem Erfassungsergebnis der ladegeräteseitigen Erfassungsschaltung (217) betriebsmäßig zu berechnen und den ladegeräteseitigen Stromwert (CSI) mit dem geräteseitigen Stromwert (DSI) betriebsmäßig zu vergleichen, und wenn der ladegeräteseitige Stromwert (CSI) den geräteseitigen Stromwert (DSI) um mehr als einen vorgegebenen Wert übersteigt, die ladegeräteseitige Steuerschaltung (219) konfiguriert ist den Ausgangsschalter (215) auszuschalten, um die Größe von wenigstens einem von dem Ausgangsspannungssignal (Vout) und dem Ausgangsstromsignal (Iout) zu reduzieren.

4. Adaptiver Stromrichter (110) nach Anspruch 1, **dadurch gekennzeichnet, dass**
die ladegeräteseitige Steuerschaltung (219), betriebsmäßig eingerichtet ist einen entsprechenden ladegeräteseitigen Stromwert (CSI) basierend auf dem Erfassungsergebnis der ladegeräteseitigen Erfassungsschaltung (217) zu berechnen und den ladegeräteseitigen Stromwert (CSI) an das Mobilgerät (104) durch das Datensignal (DATA) zu übertragen, wobei das Mobilgerät (104) den ladegeräteseitigen Stromwert (CSI) mit einem geräteseitigen Stromwert (DSI), der dem Signal auf dem Leistungsaufnahmepfad (Vin; Iin; VB; IB) entspricht, vergleichen kann;
wobei, wenn der ladegeräteseitige Stromwert (CSI) den geräteseitigen Stromwert (DSI) um mehr als einen vorbestimmten Wert übersteigt, das Mobilgerät (104) einen Verringerungsbefehl erzeugt und den Verringerungsbefehl an die ladegeräteseitigen Steuerschaltung (219) durch das Datensignal (DATA) überträgt, und die ladegeräteseitige Steuerschaltung (219) konfiguriert ist die Stromrichterschaltung (211) zu steuern, um die Größe des DC-Stromsignals (Idc) und/oder des DC-Spannungssignal (Vdc) gemäß dem Verringerungsbefehl zu verringern, um die Größe von mindestens einem von dem Ausgangsspannungssignal (Vout) und dem Ausgangsstromsignal (Iout) zu reduzieren.

5. Adaptiver Stromrichter (110) nach Anspruch 1, **gekennzeichnet dadurch, dass** dieser ferner umfasst:
einen Ausgangsschalter (215), der auf dem Leistungsausgangspfad angeordnet ist und durch die ladegeräteseitige Steuerschaltung (219) gesteuert wird;
wobei die ladegeräteseitige Steuerschaltung (219) eingerichtet ist, betriebsmäßig einen entsprechenden ladegeräteseitigen Stromwert (CSI) basierend auf einem Erfassungsergebnis der ladegeräteseitigen Erfassungsschaltung (217) zu berechnen und den ladegeräteseitigen Stromwert (CSI) an das Mobilgerät (104) durch das Datensignal (DATA) zu übertragen, wobei das Mobilgerät (104) den ladegeräteseitigen Stromwert (CSI) mit einem geräteseitigen Stromwert (DSI), der dem anliegenden Signal an dem Leistungseingangspfad (Vin; Iin; VB; IB) entspricht, vergleichen kann;
wobei, wenn der ladegeräteseitige Stromwert (CSI) den geräteseitigen Stromwert (DSI) um mehr als einen vorbestimmten Wert übersteigt, das Mobilgerät (104) einen Verringerungsbefehl erzeugt und den Verringerungsbefehl an die ladegeräteseitigen Steuerschaltung (219) durch das Datensignal (DATA) überträgt, und die ladegeräteseitige Steuerschaltung (219) konfiguriert ist, den Ausgangsschalter (215) gemäß dem Verringerungsbefehl auszuschalten, um die Größe von zumindest einem von dem Ausgangsspannungssignal (Vout) und dem Ausgangsstromsignal (Iout) zu reduzieren.

6. Adaptiver Stromrichter (110) nach Anspruch 1, wobei das Mobilgerät (104) einen Zielstromwert (ITG) mit einem geräteseitigen Stromwert (DSI), der dem Signal auf dem Leistungseingangspfad entspricht (Vin; Iin; VB; IB), vergleichen kann;
wobei, wenn der Zielstromwert (ITG) den geräteseitigen Stromwert (DSI) um mehr als einen vorbestimmten Wert übersteigt, das Mobilgerät (104) einen Verringerungsbefehl erzeugt und den Verringerungsbefehl an die ladegeräteseitige Steuerschaltung (219) durch das Datensignal (DATA) überträgt, und die ladegeräteseitige Steuerschaltung (219) konfiguriert ist, die Stromrichterschaltung (211) zu steuern, um die Größe des DC-Stromsignals (Idc) und/oder der DC-Spannungssignals (Vdc) gemäß dem Verringerungsbefehl zu verringern, um die Größe von zumindest einem von dem Ausgangsspannungssignal (Vout) und/oder dem Ausgangsstromsignal (Iout) zu verringern.

7. Adaptiver Stromrichter (110) nach Anspruch 1, **gekennzeichnet dadurch, dass** dieser ferner umfasst:
einen Ausgangsschalter (215), der auf dem Leistungsausgangspfad angeordnet ist und durch die ladegeräteseitige Steuerschaltung (219) gesteuert wird;
wobei das Mobilgerät (104), einen Zielstromwert (ITG) mit einem geräteseitigen Stromwert (DSI), der dem Signal auf dem Leistungseingangspfad (Vin; Iin; VB; IB) entspricht, vergleichen kann, und wenn der Zielstromwert (ITG) den geräteseitigen Stromwert (DSI) um mehr als einen vorbestimmten Wert übersteigt, das Mobilgerät (104) einen Verringerungsbefehl erzeugt und den Verringerungsbefehl an die ladegeräteseitige Steuerschaltung (219) durch das Datensignal (DATA) überträgt, und die ladegeräteseitige Steuerschaltung (219) konfiguriert ist, den Ausgangsschalter (215) gemäß dem Verringerungsbefehl auszuschalten, um die Größe von zumindest einem von dem Ausgangsspannungssignal (Vout) und/oder dem Ausgangsstromsignal (Iout) zu reduzieren.

8. Adaptiver Stromrichter (110) nach Anspruch 1, **dadurch gekennzeichnet, dass** die ladegeräteseitige Steuerschaltung (219) eingerichtet ist, ein Referenzspannungssignal (Vref) und ein Referenzstromsignal (Iref) basierend auf dem Inhalt des Datensignals (DATA) zu erzeugen und betriebsmäßig das Referenzspannungssignal (Vref) und des Referenzstromsignal (Iref) zum Steuern der Stromrichterschaltung (211) zum jeweiligen Einstellen der Größe des DC-Spannungssignals (Vdc) und der Größe des DC-Stromsignals (Idc) zu verwenden.

9. Adaptiver Stromrichter (110) nach Anspruch 8, **dadurch gekennzeichnet, dass** die ladegeräteseitige Steuerschaltung (219) umfasst:
einen ersten DAC (310), der mit der Stromrichterschaltung (211) gekoppelt ist, um das Referenzstromsignal (Iref) gemäß einem ersten digitalen Wert (D1) betriebsmäßig zu erzeugen und das Referenzstromsignal (Iref) betriebsmäßig zum Steuern der Stromrichterschaltung (211) zu verwenden, um die Größe des DC-Stromsignals (Idc) einzustellen;
einen zweiten DAC (320), der mit der Stromrichterschaltung (211) gekoppelt ist, um das Referenzspannungssignal (Vref) gemäß einem zweiten digitalen Wert (D2) betriebsmäßig zu erzeugen und das Referenzspannungssignal (Vref) betriebsmäßig zum Steuern der Stromrichterschaltung (211) zu nutzen, um die Größe des DC-Spannungssignals (Vdc) einzustellen; und
eine mit der Kommunikationsschnittstelle (213), dem ersten DAC (310) und dem zweiten DAC (320) gekoppelte ladegeräteseitige digitale Verarbeitungsschaltung (350), die eingerichtet ist um zumindest einen von dem ersten digitalen Wert (D1) und dem zweiten digitalen Wert (D2) basierend auf dem Inhalt des Datensignals (DATA), das von der Kommunikationsschnittstelle (213) übertragen wird, betriebsmäßig einzustellen.

10. Adaptiver Stromrichter (110) nach Anspruch 9, **dadurch gekennzeichnet dass**, die ladegeräteseitige Erfassungsschaltung (217) eingerichtet ist, das Signal auf dem Leistungsausgabeweg (Vdc; Idc) betriebsmäßig zu erfassen, um ein Ausgangsspannungserfassungssignal (Svo) und ein Ausgangsstromerfassungssignal (Sio) zu erzeugen;
wobei die ladegeräteseitige Steuerschaltung (219) ferner umfasst:
einen ersten ladegeräteseitigen ADC (330), der zwischen der ladegeräteseitigen Erfassungsschaltung (217) und der ladegeräteseitigen digitalen Verarbeitungsschaltung (350) gekoppelt ist, um das Ausgangsspannungserfassungssignal (Svo) betriebsmäßig in einen Ausgangsspannungserfassungswert (Dvo) umzuwandeln; und
ein zweiter ladegeräteseitiger ADC (340), der zwischen der ladegeräteseitigen Erfassungsschaltung (217) und der ladegeräteseitigen digitalen Verarbeitungsschaltung (350) gekoppelt ist, um das Ausgangsstromerfassungssignal (Sio) betriebsmäßig in einen Ausgangsstromerfassungswert (Dio) umzuwandeln;
wobei die ladegeräteseitige digitale Verarbeitungsschaltung (350) eingerichtet ist betriebsmäßig einen ladegeräteseitigen Spannungswert (CSV) basierend auf dem Ausgangsspannungserfassungswert (Dvo) zu berechnen, um einen ladegeräteseitigen Stromwert (CSI) basierend auf dem Ausgangsstromerfassungswert (Dio) zu berechnen, und um den ersten digitalen Wert (D1) oder den zweiten digitalen Wert (D2), gemäß dem ladegeräteseitigen Spannungswert (CSV) oder dem ladegeräteseitigen Stromwert (CSI) betriebsmäßig einzustellen.

11. Adaptiver Stromrichter (110) nach Anspruch 10, **gekennzeichnet dadurch, dass** dieser ferner umfasst:
einen Ausgangsschalter (215), der auf dem Leistungsausgangspfad positioniert ist und durch die ladegeräteseitige digitale Verarbeitungsschaltung (350) gesteuert wird;
wobei die ladegeräteseitige digitale Verarbeitungsschaltung (350) eingerichtet ist, um die Größe von mindestens einem von dem Ausgangsspannungssignal (Vout) und dem Ausgangsstromsignal (Iout) betriebsmäßig zu reduzieren, indem der Ausgangsschalter (215) ausgeschaltet wird.

12. Adaptiver Stromrichter (110) nach Anspruch 9, **dadurch gekennzeichnet, dass**
die ladegeräteseitige Erfassungsschaltung (217) eingerichtet ist, um ein Signal auf dem Leistungsausgabeweg (Vdc; Idc) betriebsmäßig zu erfassen, um ein Ausgangsspannungserfassungssignal (Svo) und ein Ausgangsstromerfassungssignal (Sio) zu erzeugen;
wobei die ladegeräteseitige Steuerschaltung (219) ferner umfasst:
einen mit der ladegeräteseitigen Erfassungsschaltung (217) gekoppelten ladegeräteseitiger Multiplexer (440), der zum selektiven Ausgeben des Ausgangsspannungserfassungssignals (Svo) oder des Ausgangsstromerfassungssignals (Sio) unter der Steuerung eines ladegeräteseitigen Auswahlsignals (M1) eingerichtet ist; und
einen zwischen dem ladegeräteseitigen Multiplexer (440) und der ladegeräteseitigen digitalen Verarbeitungsschaltung (350) gekoppelten ersten ladegeräteseitigen ADC (330), um ein Ausgangssignal des ladegeräteseitigen Multiplexers (440) betriebsmäßig in einen entsprechender ladegeräteseitiger Abtastwert (Dout) umzuwandeln;
wobei die ladegeräteseitige digitale Verarbeitungsschaltung (350) eingerichtet ist, um betriebsmäßig das ladegeräteseitige Auswahlsignal (M1) zu erzeugen, um betriebsmäßig einen ladegeräteseitigen Spannungswert (CSV) oder einen ladegeräteseitigen Stromwert (CSI) basierend auf dem ladegeräteseitige Erfassungswert (Dout) zu berechnen und um betriebsmäßig den ersten digitalen Wert (D1) oder den zweiten digitalen Wert (D2) gemäß dem ladegeräteseitigen Spannungswert (CSV) oder dem ladegeräteseitigen Stromwert (CSI) einzustellen.

13. Adaptiver Stromrichter (110) nach Anspruch 12, **gekennzeichnet dadurch, dass** dieser ferner umfasst:
einen Ausgangsschalter (215), der auf dem Leistungsausgangspfad positioniert ist und durch die ladegeräteseitige digitale Verarbeitungsschaltung (350) gesteuert wird;
wobei die ladegeräteseitige digitale Verarbeitungsschaltung (350) eingerichtet ist, die Größe von mindestens einem von dem Ausgangsspannungssignal (Vout) und dem Ausgangsstromsignal (Iout) betriebsmäßig zu reduzieren, indem der Ausgangsschalter (215) ausgeschaltet wird.

14. Adaptiver Stromrichter (110) nach Anspruch 9, **dadurch gekennzeichnet, dass** die ladegeräteseitige digitale Verarbeitungsschaltung (350) eingerichtet ist, um betriebsmäßig einen ladegeräteseitigen Spannungswert (CSV) oder einen ladegeräteseitigen Stromwert (CSI) entsprechend dem Signal auf dem Leistungsausgangspfad (Vdc; Idc) an das Mobilgerät (104) durch das Datensignal (DATA), zu übertragen.

15. Adaptiver Stromrichter (110) nach einem der Ansprüche 1-14, wobei das mobile Ladegerät (902) ferner umfasst:
ein Empfangsanschluss (920); und
einen ladegeräteseitigen Verbinder (940), der konfiguriert ist, um mit der Kommunikationsschnittstelle (213) gekoppelt zu werden und lösbar mit dem Empfangsanschluss (920) verbunden werden kann;
wobei das Ladekabel (130) so konfiguriert ist, dass es zwischen dem Empfangsanschluss (920) und dem Ausgangsanschluss (120) gekoppelt ist und das DC-Spannungssignal (Vdc) und das DC-Stromsignal (Idc) über das Empfangsendgerät (920), den ladegeräteseitigen Verbinder (940) und die Kommunikationsschnittstelle (213) empfängt.

## Revendications

1. Convertisseur de courant adaptatif (110) d'un chargeur mobile (102 ; 902) configuré de façon à charger un dispositif mobile (104), dans lequel le dispositif mobile (104) comprend un connecteur du côté dispositif (140) et une batterie (150), et un chemin d'entrée du courant est agencé entre le connecteur du côté dispositif (140) et la batterie (150), le convertisseur de courant adaptatif (110) comprenant :
un circuit convertisseur de courant (211), agencé de façon à convertir de manière opérationnelle un signal de tension de source (Vs) et un signal de courant de source (Is) en un signal de tension continue (Vdc) et en un signal de courant continu (Idc) ;
une interface de communication (213), agencée de façon à recevoir et à transmettre de manière opérationnelle un signal de données (DATA), de façon à recevoir de manière opérationnelle le signal de tension continue (Vdc) et le signal de courant continu (Idc) par l'intermédiaire d'un chemin de sortie du courant agencé entre le circuit convertisseur de courant (211) et l'interface de communication (213), et de façon à délivrer en sortie de manière opérationnelle le signal de tension continue (Vdc) et le signal de courant continu (Idc) à un câble de charge (130), de telle sorte que le câble de charge (130) fournisse un signal de tension de sortie (Vout) et un signal de courant de sortie (Iout) à une borne de sortie (120) connectée de manière amovible au connecteur du côté dispositif (140) lors de la réception du signal de tension continue (Vdc) et du signal de courant continu (Idc) ;
un circuit de commande du côté chargeur (219), couplé au circuit convertisseur de courant (211) et à l'interface de communication (213), agencé de façon à recevoir de manière opérationnelle le signal de données (DATA), et à commander de manière opérationnelle le fonctionnement du circuit convertisseur de courant (211) ; et
un circuit de détection du côté chargeur (217), couplé au circuit de commande du côté chargeur (219), et agencé de façon à détecter de manière opérationnelle un signal sur le chemin de sortie du courant (Vdc ; Idc) ;
dans lequel le circuit de commande du côté chargeur (219) est agencé de façon à générer de manière opérationnelle une valeur de tension correspondante du côté chargeur (CSV) sur la base du résultat de la détection du circuit de détection du côté chargeur (217), et lorsque le dispositif mobile (104) transmet une valeur de tension du côté dispositif (DSV) qui correspond au signal présent sur le chemin d'entrée du courant (Vin ; Iin ; VB ; IB), au circuit de commande du côté chargeur (219) par l'intermédiaire du signal de données (DATA), le circuit de commande du côté chargeur (219) est agencé de façon à calculer de manière opérationnelle la différence entre la valeur de la tension du côté chargeur (CSV) et la valeur de la tension du côté dispositif (DSV), de façon à générer une valeur d'estimation de la chute de tension dans le câble de charge (130) ;
**caractérisé en ce que** le circuit de commande du côté chargeur (219) est agencé en outre de façon à commander de manière opérationnelle le circuit convertisseur de courant (211) de façon à maintenir le signal de tension de sortie (Vout) et le signal de courant de sortie (Iout) fournis au dispositif mobile (104), dans une plage de sécurité, en réglant la grandeur de l'un au moins du signal de courant continu (Idc) et du signal de tension continue (Vdc) sur la base de la valeur d'estimation de la chute de tension, de façon à commander la chute de tension dans le câble de charge (130) de manière à ce qu'elle soit inférieure à un seuil prédéterminé.

2. Convertisseur de courant adaptatif (110) selon la revendication 1, **caractérisé par** ce qui suit :
lorsque le dispositif mobile (104) transmet une valeur du courant du côté dispositif (DSI) qui correspond au signal présent sur le chemin d'entrée du courant (Vin ; Iin ; VB ; IB), au circuit de commande du côté chargeur (219) par l'intermédiaire du signal de données (DATA), le circuit de commande du côté chargeur (219) est agencé de façon à calculer de manière opérationnelle une valeur du courant correspondante du côté chargeur (CSI) sur la base du résultat de la détection du circuit de détection du côté chargeur (217), et de façon à comparer de manière opérationnelle la valeur du courant du côté chargeur (CSI) à la valeur du courant du côté dispositif (DSI) ;
dans lequel, si la valeur du courant du côté chargeur (CSI) dépasse la valeur du courant du côté dispositif (DSI) de plus qu'une valeur prédéterminée, le circuit de commande du côté chargeur (219) est configuré de façon à commander le circuit convertisseur de courant (211) de manière à ce qu'il diminue la grandeur de l'un au moins du signal de courant continu (Idc) et du signal de tension continue (Vdc), de manière à réduire la grandeur de l'un au moins du signal de tension de sortie (Vout) et du signal de courant de sortie (Iout).

3. Convertisseur de courant adaptatif (110) selon la revendication 1, **caractérisé par le fait qu'**il comprend en outre :
un commutateur de sortie (215), positionné sur le chemin de sortie du courant, et commandé par le circuit de commande du côté chargeur (219) ;
dans lequel, lorsque le dispositif mobile (104) transmet la valeur du courant du côté dispositif (DSI) qui correspond au signal présent sur le chemin d'entrée de courant (Vin ; Iin ; VB ; IB), au circuit de commande du côté chargeur (219) par l'intermédiaire du signal de données (DATA), le circuit de commande du côté chargeur (219) est agencé de façon à calculer de manière opérationnelle une valeur du courant correspondante du côté chargeur (CSI), sur la base du résultat de la détection du circuit de détection du côté chargeur (217), et de façon à comparer de manière opérationnelle la valeur du courant du côté chargeur (CSI) à la valeur du courant du côté dispositif (DSI), et si la valeur du courant du côté chargeur (CSI) dépasse la valeur du courant du côté dispositif (DSI) de plus qu'une valeur prédéterminée, le circuit de commande du côté chargeur (219) est configuré de façon à arrêter le commutateur de rendement (215) de manière à réduire la grandeur de l'un au moins du signal de tension de sortie (Vout) et du signal de courant de sortie (Iout).

4. Convertisseur de courant adaptatif (110) selon la revendication 1, **caractérisé par** ce qui suit :
le circuit de commande du côté chargeur (219) est agencé de façon à calculer de manière opérationnelle la valeur du courant correspondante du côté chargeur (CSI) sur la base du résultat de la détection du circuit de détection du côté chargeur (217), et à transmettre la valeur du courant du côté chargeur (CSI) au dispositif mobile (104) par l'intermédiaire du signal de données (DATA) ;
dans lequel le dispositif mobile (104) est capable de comparer la valeur du courant du côté chargeur (CSI) à la valeur du courant du côté dispositif (DSI) qui correspond au signal présent sur le chemin d'entrée de courant (Vin ; Iin ; VB ; IB) ;
dans lequel, si la valeur du courant du côté chargeur (CSI) dépasse la valeur du courant du côté dispositif (DSI) de plus qu'une valeur prédéterminée, le dispositif mobile (104) génère une instruction de diminution, et transmet l'instruction de diminution au circuit de commande du côté chargeur (219) par l'intermédiaire du signal de données (DATA), et le circuit de commande du côté chargeur (219) est configuré de façon à commander le circuit convertisseur de courant (211) de manière à réduire la grandeur de l'un au moins du signal de courant continu (Idc) et du signal de tension continue (Vdc) selon l'instruction de diminution, de manière à réduire la grandeur de l'un au moins du signal de tension de sortie (Vout) et du signal de courant de sortie (Iout).

5. Convertisseur de courant adaptatif (110) selon la revendication 1, **caractérisé par le fait qu'**il comprend en outre :
un commutateur de sortie (215), positionné sur le chemin de sortie du courant, et commandé par le circuit de commande du côté chargeur (219) ;
dans lequel le circuit de commande du côté chargeur (219) est agencé de façon à calculer de manière opérationnelle la valeur du courant correspondante du côté chargeur (CSI) sur la base du résultat de la détection du circuit de détection du côté chargeur (217), et à transmettre la valeur du courant du côté chargeur (CSI) au dispositif mobile (104) par l'intermédiaire du signal de données (DATA) ;
dans lequel le dispositif mobile (104) est capable de comparer la valeur du courant du côté chargeur (CSI) à la valeur du courant du côté dispositif (DSI) qui correspond au signal présent sur le chemin d'entrée de courant (Vin ; Iin ; VB ; IB) ;
dans lequel, si la valeur du courant du côté chargeur (CSI) dépasse la valeur du courant du côté dispositif (DSI) de plus qu'une valeur prédéterminée, le dispositif mobile (104) génère une instruction de diminution, et transmet l'instruction de diminution au circuit de commande du côté chargeur (219) par l'intermédiaire du signal de données (DATA), et le circuit de commande du côté chargeur (219) est configuré de façon à arrêter le commutateur de sortie (215) selon l'instruction de diminution de manière à réduire la grandeur de l'un au moins du signal de tension de sortie (Vout) et du signal de courant de sortie (Iout).

6. Convertisseur de courant adaptatif (110) selon la revendication 1,
dans lequel le dispositif mobile (104) est capable de comparer une valeur cible du courant (ITG) à la valeur du courant du côté dispositif (DSI) qui correspond au signal présent sur le chemin d'entrée du courant (Vin ; Iin ; VB ; IB) ;
dans lequel, si la valeur cible du courant (ITG) dépasse la valeur du courant du côté dispositif (DSI) de plus qu'une valeur prédéterminée, le dispositif mobile (104) génère une instruction de diminution, et transmet l'instruction de diminution au circuit de commande du côté chargeur (219) par l'intermédiaire du signal de données (DATA), et le circuit de commande du côté chargeur (219) est configuré de façon à commander le circuit convertisseur de courant (211) de manière à réduire la grandeur de l'un au moins du signal de courant continu (Idc) et du signal de tension continue (Vdc) selon l'instruction de diminution, de manière à réduire la grandeur de l'un au moins du signal de tension de sortie (Vout) et du signal de courant de sortie (Iout).

7. Convertisseur de courant adaptatif (110) selon la revendication 1, **caractérisé par le fait qu'**il comprend en outre :
un commutateur de sortie (215), positionné sur le chemin de sortie du courant, et commandé par le circuit de commande du côté chargeur (219) ;
dans lequel le dispositif mobile (104) est capable de comparer la valeur cible du courant (ITG) à la valeur du courant du côté dispositif (DSI) qui correspond au signal présent sur le chemin d'entrée de courant (Vin ; Iin ; VB ; IB), et si la valeur cible du courant (ITG) dépasse la valeur du courant du côté dispositif (DSI) de plus qu'une valeur prédéterminée, le dispositif mobile (104) génère une instruction de diminution, et transmet l'instruction de diminution au circuit de commande du côté chargeur (219) par l'intermédiaire du signal de données (DATA), et le circuit de commande du côté chargeur (219) est configuré de façon à arrêter le commutateur de sortie (215) selon l'instruction de diminution de manière à réduire la grandeur de l'un au moins du signal de tension de sortie (Vout) et du signal de courant de sortie (Iout).

8. Convertisseur de courant adaptatif (110) selon la revendication 1, **caractérisé en ce que** le circuit de commande du côté chargeur (219) est agencé de façon à générer de manière opérationnelle un signal de tension de référence (Vref) et un signal de courant de référence (Iref) sur la base du contenu du signal de données (DATA), et de façon à utiliser de manière opérationnelle le signal de tension de référence (Vref) et le signal de courant de référence (Iref) de manière à commander le circuit convertisseur de courant (211) de façon à régler respectivement la grandeur du signal de tension continue (Vdc) et la grandeur du signal de courant continu (Idc).

9. Convertisseur de courant adaptatif (110) selon la revendication 8, **caractérisé en ce que** le circuit de commande du côté chargeur (219) comprend :
un premier DAC (310), couplé au circuit convertisseur de courant (211), agencé de façon à générer de manière opérationnelle le signal de courant de référence (Iref) selon une première valeur numérique (D1), et de façon à utiliser de manière opérationnelle le signal de courant de référence (Iref) de manière à commander le circuit convertisseur de courant (211) de façon à régler la grandeur du signal de courant continu (Idc) ;
un second DAC (320), couplé au circuit convertisseur de courant (211), agencé de façon à générer de manière opérationnelle le signal de tension de référence (Vref) selon une seconde valeur numérique (D2), et de façon à utiliser de manière opérationnelle le signal de tension de référence (Vref) de manière à commander le circuit convertisseur de courant (211) de façon à régler la grandeur du signal de tension continue (Vdc) ; et
un circuit de traitement numérique du côté chargeur (350), couplé à l'interface de communication (213), au premier DAC (310), et au second DAC (320), agencé de façon à régler de manière opérationnelle l'une au moins de la première valeur numérique (D1) et de la seconde valeur numérique (D2) sur la base du contenu du signal de données (DATA) transmis par l'interface de communication (213).

10. Convertisseur de courant adaptatif (110) selon la revendication 9, **caractérisé par** ce qui suit :
le circuit de détection du côté chargeur (217) est agencé de façon à détecter de manière opérationnelle le signal présent sur le chemin de sortie du courant (Vdc ; Idc) de façon à générer un signal de détection de la tension de sortie (Svo) et un signal de détection du courant de sortie (Sio) ;
dans lequel le circuit de commande du côté chargeur (219) comprend en outre :
un premier ADC du côté chargeur (330), couplé entre le circuit de détection du côté chargeur (217) et le circuit de traitement numérique du côté chargeur (350), agencé de façon à convertir de manière opérationnelle le signal de détection de la tension de sortie (Svo) en une valeur de détection de la tension de sortie (Dvo) ; et
un second ADC du côté chargeur (340), couplé entre le circuit de détection du côté chargeur (217) et le circuit de traitement numérique du côté chargeur (350), agencé de façon à convertir de manière opérationnelle le signal de détection du courant de sortie (Sio) en une valeur de détection du courant de sortie (Dio) ;
dans lequel le circuit de traitement numérique du côté chargeur (350) est agencé de façon à calculer de manière opérationnelle la valeur de la tension du côté chargeur (CSV) sur la base de la valeur de détection de la tension de sortie (Dvo), de façon à calculer de manière opérationnelle la valeur du courant du côté chargeur (CSI) sur la base de la valeur de détection du courant de sortie (Dio), et de façon à régler de manière opérationnelle la première valeur numérique (D1) ou la seconde valeur numérique (D2) selon la valeur de la tension du côté chargeur (CSV) ou la valeur courant du côté chargeur (CSI).

11. Convertisseur de courant adaptatif (110) selon la revendication 10, **caractérisé par le fait qu'**il comprend en outre :
un commutateur de sortie (215), positionné sur le chemin de sortie du courant, et commandé par le circuit de traitement numérique du côté chargeur (350) ;
dans lequel le circuit de traitement numérique du côté chargeur (350) est agencé de façon à réduire la grandeur de l'un au moins du signal de tension de sortie (Vout) et du signal de courant de sortie (Iout) en arrêtant le commutateur de sortie (215).

12. Convertisseur de courant adaptatif (110) selon la revendication 9, **caractérisé par** ce qui suit :
le circuit de détection du côté chargeur (217) est agencé de façon à détecter de manière opérationnelle le signal présent sur le chemin de sortie du courant (Vdc ; Idc) de façon à générer un signal de détection de la tension de sortie (Svo) et un signal de détection du courant de sortie (Sio) ;
dans lequel le circuit de commande du côté chargeur (219) comprend en outre :
un multiplexeur du côté chargeur (440), couplé au circuit de détection du côté chargeur (217), agencé de façon à délivrer en sortie de manière sélective le signal de détection de la tension de sortie (Svo) ou le signal de détection du courant de sortie (Sio) sous la commande d'un signal de sélection du côté chargeur (M1) ; et
un premier ADC du côté chargeur (330), couplé entre le multiplexeur du côté chargeur (440) et le circuit de traitement numérique du côté chargeur (350), agencé de façon à convertir de manière opérationnelle le signal de sortie du multiplexeur du côté chargeur (440) en une valeur de détection de la tension de sortie correspondante (Dout) ;
dans lequel le circuit de traitement numérique du côté chargeur (350) est agencé de façon à générer de manière opérationnelle le signal de sélection du côté chargeur (M1), de façon à calculer de manière opérationnelle la valeur de la tension du côté chargeur (CSV), ou la valeur du courant du côté chargeur (CSI) sur la base de la valeur de détection du côté chargeur (Dout), et de façon à régler de manière opérationnelle la première valeur numérique (D1) ou la seconde valeur numérique (D2) selon la valeur de la tension du côté chargeur (CSV) ou la valeur du courant du côté chargeur (CSI).

13. Convertisseur de courant adaptatif (110) selon la revendication 12, **caractérisé par le fait qu'**il comprend en outre :
un commutateur de sortie (215), positionné sur le chemin de sortie du courant, et commandé par le circuit de traitement numérique du côté chargeur (350) ;
dans lequel le circuit de traitement numérique du côté chargeur (350) est agencé de façon à réduire la grandeur de l'un au moins du signal de tension de sortie (Vout) et du signal de courant de sortie (Iout) en arrêtant le commutateur de sortie (215).

14. Convertisseur de courant adaptatif (110) selon la revendication 9, **caractérisé en ce que** le circuit de traitement numérique du côté chargeur (350) est agencé de façon à transmettre de manière opérationnelle la valeur de la tension du côté chargeur (CSV) ou la valeur du courant du côté chargeur (CSI) qui correspond au signal présent sur le chemin de sortie du courant (Vdc ; Idc), au dispositif mobile (104) par l'intermédiaire du signal de données (DATA).

15. Convertisseur de courant adaptatif (110) selon l'une quelconque des revendications 1 à 14, dans lequel le chargeur mobile (902) comprend en outre :
une borne de réception (920) ; et
un connecteur du côté chargeur (940), configuré de façon à être couplé à l'interface de communication (213), et à pouvoir être connecté de manière amovible à la borne de réception (920) ;
dans lequel le câble de charge (130) est configuré de façon à être couplé entre la borne de réception (920) et la borne de sortie (120), et de façon à recevoir le signal de tension continue (Vdc) et le signal de courant continu (Idc) par l'intermédiaire de la borne de réception (920), du connecteur du côté chargeur (940), et de l'interface de communication (213).
